# EUROPEAN PATENT APPLICATION

(11) **EP 4 723 092 A1**
(43) Date of publication of application: **08.04.2026**
(21) Application number: 25205183.4
(22) Date of filing: 29.09.2025
(51) Int. Cl.: G09G 3/36

(54) **SCAN DRIVING METHOD FOR RENDERING HIGH-CONTRAST IMAGE AND CHOLESTERIC LIQUID-CRYSTAL DISPLAY DEVICE USING THE SAME**

(30) Priority: 04.10.2024 US 202463703302 P; 15.09.2025 US 202519328831
(71) Applicant: Iris Optronics Co., Ltd., Tainan City 711010 (TW)
(72) Inventor: YAO, CHENG HONG, GUIREN DIST., TAINAN CITY (TW); LIAO, CHI CHANG, GUIREN DIST., TAINAN CITY (TW)
(74) Representative: Vossius & Partner Patentanwälte Rechtsanwälte mbB

(57) **Abstract**

A scan driving method for rendering a high-contrast image, for use in a cholesteric liquid-crystal display device, is provided. The cholesteric liquid-crystal display device includes a display panel and a driving circuit section. The method includes: utilizing the driving circuit section to sequentially activate each scanning electrode using a modified pulse-width modulation (PWM) scanning procedure including a first stage, a second stage, and a third stage in sequence; and utilizing the driving circuit section to apply one or more alternating-current (AC) voltage pulses to pixel circuits on a first scanning electrode during the first stage to manipulate grayscale values of the pixel circuits thereon to be written in the second stage. During the first stage of the first scanning electrode, the pixel circuits on the remaining scanning electrodes within the third stage sense a zero voltage during a high-voltage period within the first stage of the first scanning electrode.

## Description

### CROSS REFERENCE TO RELATED APPLICATION

This application claims the benefit of U.S. Provisional Application No. 63/703,302 filed on October 4, 2024, the entirety of which is incorporated by reference herein.

### TECHNICAL FIELD

The present invention relates to display devices, and in particular, to a scan driving method for rendering high-contrast images and a cholesteric liquid-crystal display device using the same.

### DESCRIPTION OF THE RELATED ART

The display screen of a cholesteric liquid-crystal (ChLC) display device can be reset by controlling the ChLC molecules within the ChLC display device to enter the planar state (e.g., bright state) during a reset stage of the PWM (pulse width modulation) scanning method. However, increasing the scanning time can lead to decreased reflectivity of the ChLC molecules in both the dark state (e.g., focal conic state) and the bright state (e.g., planar state), limiting the effectiveness of improving screen contrast through increased scanning time in PWM scanning methods.

### SUMMARY

Therefore, a scan driving method for high-quality image and a cholesteric liquid-crystal display device using the same are provided to address the aforementioned issues.

In an aspect of the present disclosure, a cholesteric liquid-crystal display device is provided, which includes a liquid-crystal display panel having a first substrate on which a plurality of scanning electrodes extending in a first direction are formed; a second substrate on which a plurality of data electrodes extending in a second direction different from the first direction are formed; a cholesteric liquid crystal layer formed between the first substrate and the second substrate; and a driving circuit section, configured to apply a plurality of alternating-current (AC) voltage pulses to pixel circuits at intersections between the scanning electrodes and the data electrodes. A modified pulse-width modulation (PWM) scanning procedure of the pixel circuits on each scanning electrode sequentially activated by the driving circuit section comprises a first stage, a second stage, and a third stage arranged in sequence. The first stage is configured to manipulate grayscale values of the pixel circuits on a first scanning electrode among the plurality of scanning electrodes to be written in the second stage. When the pixel circuits on the first scanning electrode are within the first stage, the pixel circuits on the remaining scanning electrodes, which are within a first period of the third stage, sense a zero voltage, wherein the first period corresponds to a high-voltage period within the first stage of the pixel circuits on the first scanning electrode.

In another aspect of the present disclosure, a scan driving method for rendering a high-contrast image, for use in a cholesteric liquid-crystal display device, is provided. The cholesteric liquid-crystal display device includes a display panel and a driving circuit section. The display panel includes a plurality of scanning electrodes and a plurality of data electrodes. The method includes the following steps: utilizing the driving circuit section to sequentially activate each scanning electrode within the display panel using a modified pulse-width modulation (PWM) scanning procedure, which comprises a first stage, a second stage, and a third stage in sequence; and utilizing the driving circuit section to apply one or more alternating-current (AC) voltage pulses to pixel circuits on a first scanning electrode among the plurality of scanning electrodes during the first stage of each pixel circuit on the first scanning electrode to manipulate grayscale values of the pixel circuits on the first scanning electrode to be written in the second stage. When the pixel circuits on the first scanning electrode are within the first stage, the pixel circuits on the remaining scanning electrodes, which are within a first period of the third stage, sense a zero voltage, wherein the first period corresponds to a high-voltage period within the first stage of the pixel circuits on the first scanning electrode.

In yet another aspect of the present disclosure, a cholesteric liquid-crystal display device is provided, which includes a liquid-crystal display panel having a first substrate on which a plurality of scanning electrodes extending in a first direction are formed; a second substrate on which a plurality of data electrodes extending in a second direction different from the first direction are formed; a cholesteric liquid crystal layer formed between the first substrate and the second substrate; and a driving circuit section, configured to apply a plurality of alternating-current (AC) voltage pulses to pixel circuits at intersections between the scanning electrodes and the data electrodes. The driving circuit section is configured to activate each scanning electrode sequentially using a modified pulse-width modulation (PWM) scanning procedure which comprises a first stage, a second stage, and a third stage arranged in sequence. When the driving circuit section activates a first scanning electrode among the plurality of scanning electrode, the first stage of each pixel circuit on the first scanning electrode is configured to manipulate grayscale values of each pixel circuit on the first scanning electrode to be written in the second stage. When a bright-state voltage is applied to the pixel circuits on the first scanning electrode during the first stage, the pixel circuits on the remaining scanning electrodes, which are within the third stage, sense a voltage substantially equal to a zero voltage or close to the zero voltage.

### BRIEF DESCRIPTION OF THE DRAWINGS

Aspects of the present disclosure are best understood from the following detailed description when read with the accompanying figures. It is noted that in accordance with the standard practice in the industry, various features are not drawn to scale. In fact, the dimensions of the various features may be arbitrarily increased or reduced for clarity of discussion.
FIG. 1 is a block diagram of an electronic device in accordance with an embodiment of the present disclosure.
FIG. 2 is a diagram of the display device in accordance with the embodiment of FIG. 1.
FIG. 3 is a cross section of the display panel in FIG. 2.
FIGS. 4A to 4D are waveform diagrams illustrating the driving voltage applied to the pixel circuits over time in accordance with an embodiment of the present disclosure.
FIGS. 5A to 5D are waveform diagrams illustrating the driving voltage applied to the pixel circuits over time in accordance with another embodiment of the present disclosure.
FIGS. 6A-1 to 6A-4 are waveform diagrams illustrating a first-type manipulation stage within the SD+ scanning procedure in an embodiment of the present disclosure.
FIGS. 6B-1 to 6B-4 are waveform diagrams illustrating a selection stage within the SD+ scanning procedure in an embodiment of the present disclosure.
FIGS. 6C-1 to 6C-4 are waveform diagrams illustrating a first-type non-selection stage within the SD+ scanning procedure in an embodiment of the present disclosure.
FIGS. 7A-1 to 7A-4 are waveform diagrams illustrating a first-type manipulation stage within the HCSD+ scanning procedure in a first embodiment of the present disclosure.
FIGS. 7B-1 to 7B-4 are waveform diagrams illustrating a selection stage within the HCSD+ scanning procedure in the first embodiment of the present disclosure.
FIGS. 7C-1 to 7C-4 are waveform diagrams illustrating a second-type non-selection stage within the HCSD+ scanning procedure in the first embodiment of the present disclosure.
FIGS. 8A-1 to 8A-4 are waveform diagrams illustrating a first-type manipulation stage within the HCSD+ scanning procedure in a second embodiment of the present disclosure.
FIGS. 8B-1 to 8B-4 are waveform diagrams illustrating a selection stage within the HCSD+ scanning procedure in the second embodiment of the present disclosure.
FIGS. 8C-1 to 8C-4 are waveform diagrams illustrating a first-type isolated stage within the HCSD+ scanning procedure in the second embodiment of the present disclosure.
FIGS. 8D-1 to 8D-4 are waveform diagrams illustrating a second-type non-selection stage within the HCSD+ scanning procedure in the second embodiment of the present disclosure.
FIGS. 9A-1 to 9A-4 are waveform diagrams illustrating a second-type manipulation stage within the HCSD+ scanning procedure in a third embodiment of the present disclosure.
FIGS. 9B-1 to 9B-4 are waveform diagrams illustrating a selection stage within the HCSD+ scanning procedure in the third embodiment of the present disclosure.
FIGS. 9C-1 to 9C-4 are waveform diagrams illustrating a first-type isolated stage within the HCSD+ scanning procedure in the third embodiment of the present disclosure.
FIGS. 9D-1 to 9D-4 are waveform diagrams illustrating a second-type non-selection stage within the HCSD+ scanning procedure in the third embodiment of the present disclosure.

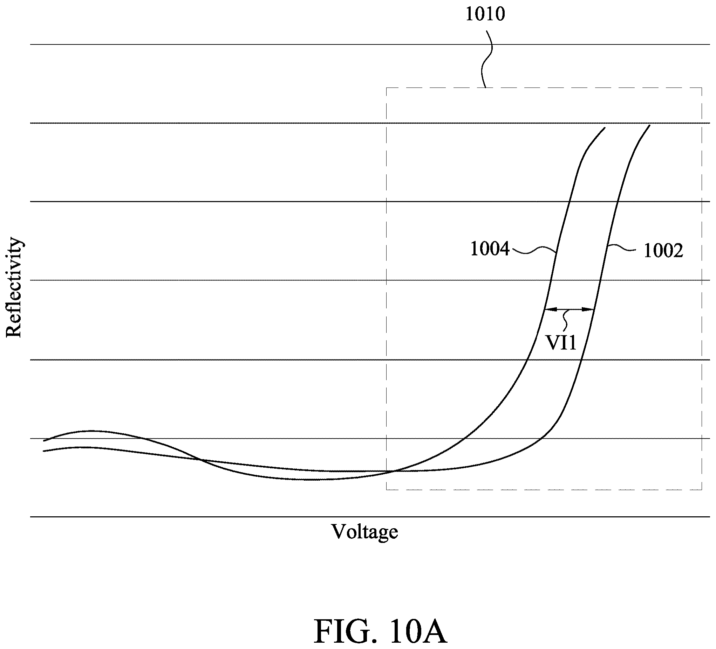

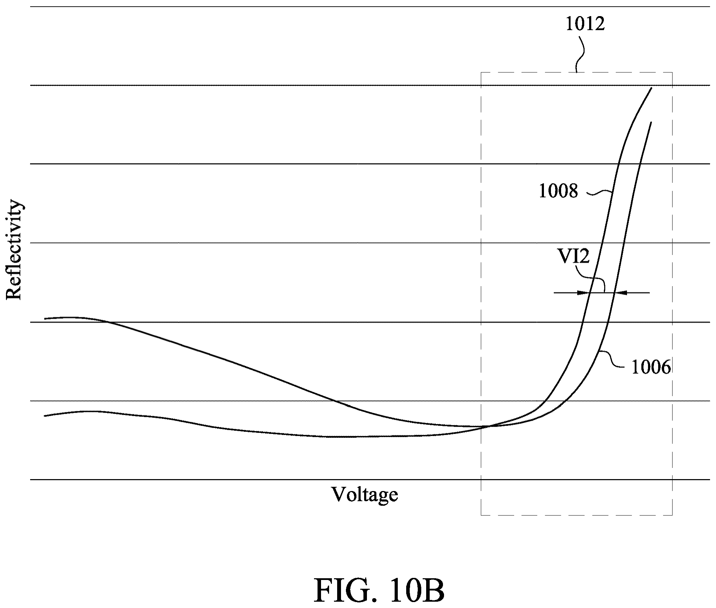

FIGs. 10A and 10B are diagrams illustrating RV curves corresponding to a dark-state voltage pulse and a bright-state voltage pulse in accordance with some embodiments of the present disclosure.

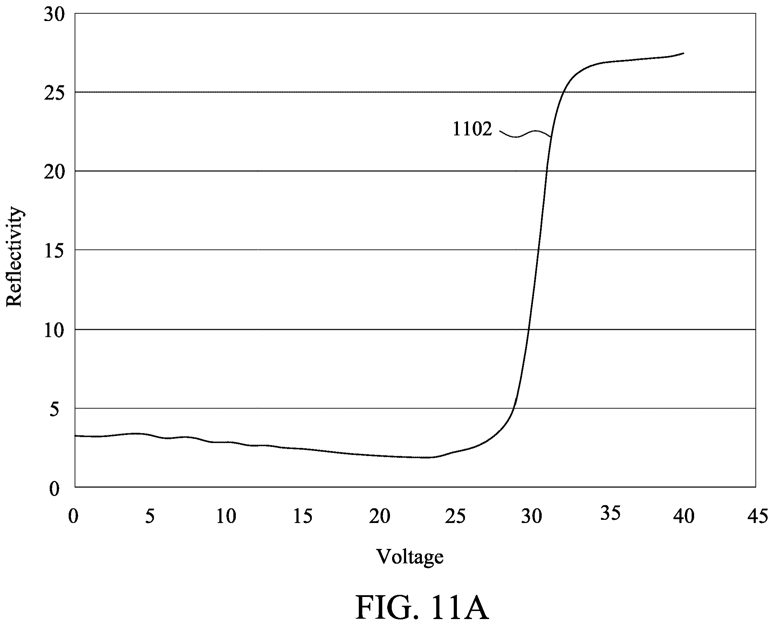

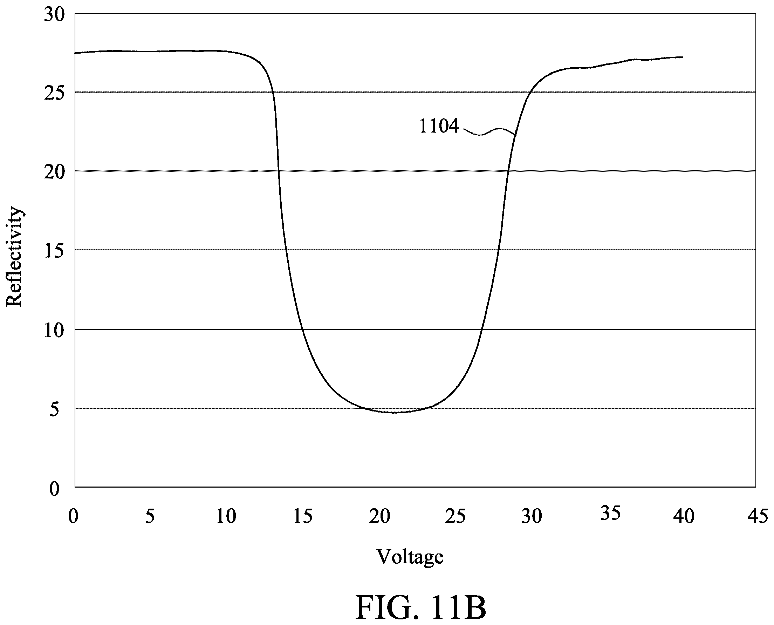

FIGs. 11A and 11B are diagrams illustrating single RV curves corresponding to a dark-state voltage pulse and a bright-state voltage pulse.
FIGS. 12A-1 to 12A-4 are waveform diagrams illustrating a first-type manipulation stage within the HCSD+ scanning procedure in a fourth embodiment of the present disclosure.
FIGS. 12B-1 to 12B-4 are waveform diagrams illustrating a selection stage within the HCSD+ scanning procedure in the fourth embodiment of the present disclosure.
FIGS. 12C-1 to 12C-4 are waveform diagrams illustrating a second-type isolated stage within the HCSD+ scanning procedure in the fourth embodiment of the present disclosure.
FIGS. 12D-1 to 12D-4 are waveform diagrams illustrating a second-type non-selection stage within the HCSD+ scanning procedure in the fourth embodiment of the present disclosure.
FIGS. 13A-1 to 13A-4 are waveform diagrams illustrating a third-type manipulation stage within the HCSD+ scanning procedure in a fifth embodiment of the present disclosure.
FIGS. 13B-1 to 13B-4 are waveform diagrams illustrating a selection stage within the HCSD+ scanning procedure in the fifth embodiment of the present disclosure.
FIGS. 13C-1 to 13C-4 are waveform diagrams illustrating a second-type isolated stage within the HCSD+ scanning procedure in the fifth embodiment of the present disclosure.
FIGS. 13D-1 to 13D-4 are waveform diagrams illustrating a second-type non-selection stage within the HCSD+ scanning procedure in the fifth embodiment of the present disclosure.

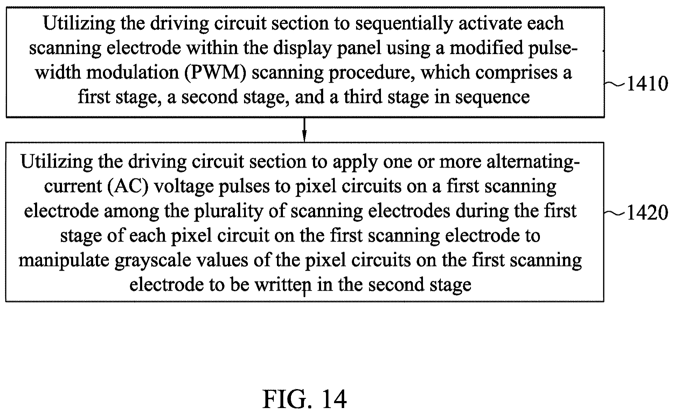

FIG. 14 is a flowchart of a scan driving method for rendering a high-contrast image in accordance with some embodiments of the present disclosure.

### DETAILED DESCRIPTION

The following disclosure provides many different embodiments, or examples, for implementing different features of the provided subject matter. Specific examples of operations, components, and arrangements are described below to simplify the present disclosure. These are, of course, merely examples and are not intended to be limiting. For example, a first operation performed before or after a second operation in the description may include embodiments in which the first and second operations are performed together, and may also include embodiments in which additional operations may be performed between the first and second operations. For example, the formation of a first feature over, on or in a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Time relative terms, such as "prior to," "before," "posterior to," "after" and the like, may be used herein for ease of description to describe the relationship of one operation or feature to another operation(s) or feature(s) as illustrated in the figures. Such time relative terms are intended to encompass different sequences of the operations depicted in the figures. Further, spatially relative terms, such as "beneath," "below," "lower," "above," "upper" and the like, may be used herein for ease of description to describe the relationship of one element or feature to another element(s) or feature(s) as illustrated in the figures. Such spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly. Relative terms for connections, such as "connect," "connected," "connection," "couple," "coupled," "in communication," and the like, may be used herein for ease of description to describe an operational connection, coupling, or linking one between two elements or features. The relative terms for connections are intended to encompass different connections, couplings, or linkings of the devices or components. The devices or components may be directly or indirectly connected, coupled, or linked to one another through, for example, another set of components. The devices or components may be connected, coupled, or linked with each other by wire and/or wirelessly.

As used herein, the singular terms "a," "an," and "the" may include plural referents unless the context clearly indicates otherwise. For example, reference to a device may include multiple devices unless the context clearly indicates otherwise. The terms "comprising" and "including" may indicate the existences of the described features, integers, steps, operations, elements, and/or components, but may not exclude the existence of combinations of one or more of the features, integers, steps, operations, elements, and/or components. The term "and/or" may include any or all combinations of one or more listed items.

Additionally, amounts, ratios, and other numerical values are sometimes presented herein in a range format. It is to be understood that such range format is used for convenience and brevity and should be understood flexibly to include numerical values explicitly specified as limits of a range, but also to include all individual numerical values or sub-ranges encompassed within that range as if each numerical value and sub-range is explicitly specified.

The nature and use of the embodiments are discussed in detail as follows. It should be appreciated, however, that the present disclosure provides many applicable inventive concepts that can be embodied in a wide variety of specific contexts. The specific embodiments discussed are merely illustrative of specific ways to embody and use the disclosure, without limiting the scope thereof.

A cholesteric liquid-crystal display (Ch-LCD) possesses bi-stable properties, allowing it to retain displayed content without power consumption. The planar state and focal conic state are both stable, meaning that when the applied voltage is deactivated, the molecular state and displayed images remain unchanged. Voltage is solely applied when it is necessary to transition the cholesteric crystal liquid molecules to a different state or refresh the displayed images. As a result, cholesteric liquid-crystal display devices have become popular in temperature sensor displays, e-books, e-paper, electronic whiteboards, and various other products.

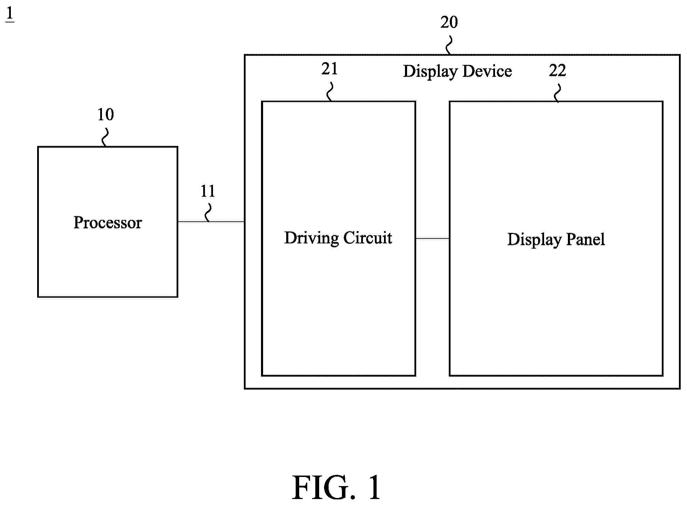

FIG. 1 is a block diagram of an electronic device in accordance with an embodiment of the present disclosure.

In some embodiments, the electronic device 1 may be an E-book, and E-paper, an electronic whiteboard, a temperature display board, etc., but the present disclosure is not limited thereto. As depicted in FIG. 1, the electronic device 1 may include a processor 10 and a display device 20. The processor 10 may be a central processing unit (CPU), a digital signal processor (DSP), an image signal processor (ISP), a microprocessor, a microcontroller unit (MCU), or any other equivalent circuit, but the present disclosure is not limited thereto. The display device 20 may be cholesteric liquid-crystal display (ChLCD) device.

In some embodiments, the display device 20 may include a driving circuit 21 and a display panel 22. The display panel 22 may be a ChLCD panel which includes multiple ChLC layers for red, green, and blue pixel arrays. Additionally, the driving circuit 21 may be configured to drive the display panel 22 using either one of a DDS (dynamic driving scheme) driving mode, a PWM (pulse width modulation) driving mode, a SD+ driving mode, and a HCSD+ (high-contrast SD+) driving mode. In other words, the display panel 22 can be driven either in the DDS driving mode, PWM driving mode, SD+ driving mode, or the HCSD+ driving mode, depending on the driving mode selected by the driving circuit 21. The details for the SD+ and HCSD+ driving modes will be described later.

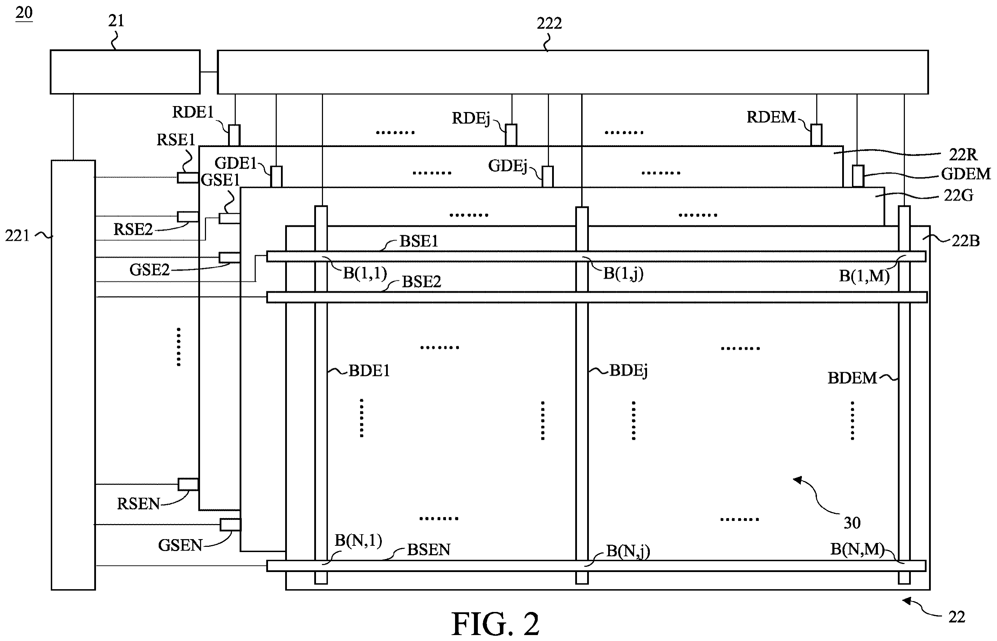

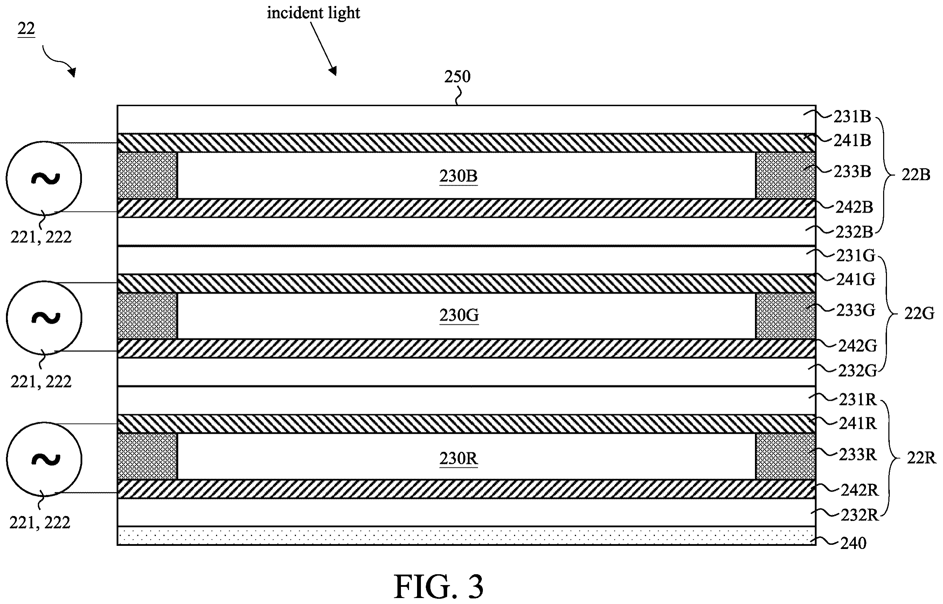

FIG. 2 is a diagram of the display device in accordance with the embodiment of FIG. 1. FIG. 3 is a cross section of the display panel in FIG. 2.

In some embodiments, the display panel 22 may include a plurality of display units 22B, 22G, and 22R, a scanning electrode driving circuit 221, and a data electrode driving circuit 222, as depicted in FIG. 2. Additionally, the display units 22B, 22G, and 22R can be stacked to form the display panel, with the display units 22B, 22G, and 22R being the topmost, middle, and bottom display units, respectively, as shown in FIG. 3. The display units 22B, 22G, and 22R may include pixels that display blue, green, and red colors, respectively, allowing the display panel 22 to render a screen 30 (e.g., a color display screen). The display unit 22B may include scanning electrodes BSE1 to BSEN (e.g., N electrodes along the Y-axis) and data electrodes BDE1 to BDEM (e.g., M electrodes along the X-axis). The scanning electrodes and data electrodes in the display units 22G and 22R are arranged in a similar manner.

In some embodiments, the scanning electrodes BSE1 to BSEN can be referred to as common (COM) electrodes, and the data electrodes BDE1 to BDEM can be referred to as segment (SEG) electrodes. Furthermore, the scanning electrodes BSE1 to BSEN and the data electrodes BDE1 to BDEM intersect in the top view of the display panel 22, as depicted in FIG. 2.

In some embodiments, a pixel circuit (e.g., a ChLC pixel circuit, not explicitly shown in FIG. 2) is disposed at each intersection between the scanning electrodes BSE1 to BSEN and data electrodes BDE1 to BDEM within the display unit 22B. This arrangement allows the pixel circuits within the display unit 22B to form a blue pixel array with a resolution of M*N. For example, the pixel circuit located at the intersection between the scanning electrode BSE1 and the data electrode BDE1 within the display unit 22B (e.g., for blue color) can be assigned the coordinates B(1, 1), while the pixel circuit at the intersection between the scanning electrode BSEN and the data electrode BDEj within the display unit 22B can be assigned the coordinates B(N, j), and so on.

Similarly, the display unit 22G may include scanning electrodes GSE1 to GSEN (e.g., N electrodes along the Y-axis) and data electrodes GDE1 to GDEM (e.g., M electrodes along the X-axis). The coordinates for each pixel circuit located at the intersections between the scanning electrodes GSE1 to GSEN and data electrodes GDE1 to GDEM within the display unit 22G can be assigned in a similar manner to those within the display unit 22B.

Similarly, the display unit 22R may include electrodes RSE1 to RSEN (e.g., N electrodes along the Y-axis) and data electrodes RDE1 to RDEM (e.g., M electrodes along the X-axis). The coordinates for each pixel circuit located at the intersections between the scanning electrodes RSE1 to RSEN and data electrodes RDE1 to RDEM within the display unit 22R can be assigned in a similar manner to those within the display unit 22B.

Moreover, the scanning electrodes BSE1 to BSEN, GSE1 to GSEN, and RSE1 to RSEN within the display units 22B, 22G, and 22R may be electrically connected to a scanning electrode driving circuit 221. In some embodiments, when the first row of the display panel 22 is to be activated, the scanning electrode driving circuit 221 may apply a voltage pulse to the scanning electrodes BSE1, GSE1, and RSE1 (e.g., common electrodes) to activate them simultaneously. In other words, the scanning electrodes with the same row number may be activated simultaneously by the scanning electrode driving circuit 221. In some embodiments, the scanning electrode driving circuit 221 and the data electrode driving circuit 222 can be collectively regarded as a driving circuit section.

In some embodiments, the scanning electrode driving circuit 221 is capable of activating one or more rows (i.e., scanning electrodes) of the display panel 22. For example, when two adjacent rows (e.g., rows n and (n+1)) of the display panel 22 are to be activated simultaneously, the scanning electrode driving circuit 221 may apply a first driving voltage to the scanning electrodes BSEn, GSEn, and RSEn at row n simultaneously, and apply a second driving voltage to the scanning electrodes BSE(n+1), GSE(n+1), and RSE(n+1) at row (n+1) simultaneously. It should be noted that the current stages of rows n and (n+1) can be different, resulting in the first driving voltage being different from the second driving voltage.

Referring to FIG. 3, in some embodiments, the display units 22B, 22G, and 22R may be laminated in this order on a surface (e.g., surface 250) of incident light. The display unit 22B may include a liquid crystal layer 230B, substrates 231B and 232B, layers 241B and 242B, and sealing material 233B. For example, the liquid crystal layer 230B may be a cholesteric liquid crystal (ChLC) layer which is sealed between the substrates 231B and 232B opposite to each other by the sealing material 233B applied onto the edges of the substrates 231B and 232B. Additionally, the average refractive index n and the helical pitch p of liquid crystal layer 230B are determined such that, for example, the wavelength λ is approximately 480 nm. The average refractive index n can be adjusted by selecting a liquid crystal material and a chiral material, and the helical pitch p can be adjusted by adjusting the content of the chiral material. Accordingly, the liquid crystal layer 230B may selectively reflect blue light in a planar state. The layers 241B and 242B may refer to regions on which the scanning electrodes BSE1 to BSEN and data electrodes BDE1 to BDEM within the display unit 22B are disposed, that are electrically connected to the scanning electrode driving circuit 221 and the data electrode driving circuit 222, respectively. Furthermore, in the focal conic state, the liquid crystal molecules within the liquid crystal layer 230B are disorderly rotated in the electrodes (e.g., layers 241B and 242B) to form helical structure, and the helical axes of the helical structures are randomly orientated. As a result, the selectivity of the liquid crystal layer 230B with respect to a reflection wavelength is lost, and the liquid crystal layer 230B transmits most of incident light. The transmitted light is absorbed by a light absorbing layer 240 whereby dark (black) display is achieved. The light absorbing layer 240 may be provided on the bottom surface of the display unit 22R.

Similarly, the display unit 22G may include a liquid crystal layer 230G, substrates 231G and 232G, layers 241G and 242G, and sealing materials 233G. For example, the liquid crystal layer 230G may be a cholesteric liquid crystal (ChLC) layer which is sealed between the substrates 231G and 232G (e.g., transparent substrates) opposite to each other by the sealing material 233G applied onto the edges of the substrates 231G and 232G. Additionally, the average refractive index n and the helical pitch p of liquid crystal layer 230G are determined such that, for example, the wavelength λ is approximately 550 nm, allowing the liquid crystal layer 230G to selectively reflect green light in a planar state. Similarly, although the scanning electrodes (e.g., GSE1 to GSEN) and data electrodes (e.g., GDE1 to GDEM) within the display unit 22G are not explicitly shown in FIGs. 2 and 3, the layers 241G and 242G may refer to regions on which these scanning electrodes GSE1 to GSEN and data electrodes GDE1 to GDEM within the display unit 22G are disposed, that are electrically connected to the scanning electrode driving circuit 221 and the data electrode driving circuit 222, respectively.

Moreover, the display unit 22R may include a liquid crystal layer 230R, substrates 231R and 232R, layers 241R and 242R, and sealing materials 233R. For example, the liquid crystal layer 230R may be a cholesteric liquid crystal (ChLC) layer which is sealed between the substrates 231R and 232R (e.g., transparent substrates) opposite to each other by the sealing material 233R applied onto the edges of the substrates 231R and 232R. Additionally, the average refractive index n and the helical pitch p of liquid crystal layer 230R are determined such that, for example, the wavelength λ is approximately 700 nm, allowing the liquid crystal layer 230R to selectively reflect red light in a planar state. Similarly, although the scanning electrodes (e.g., RSE1 to RSEN) and data electrodes (e.g., RDE1 to RDEM) within the display unit 22R are not explicitly shown in FIGs. 2 and 3, the layers 241R and 242R may refer to regions on which these scanning electrodes RSE1 to RSEN and data electrodes RDE1 to RDEM within the display unit 22R are disposed, that are electrically connected to the scanning electrode driving circuit 221 and the data electrode driving circuit 222, respectively. The operations of the ChLC molecules within the liquid crystal layers 230G and 230R in the planar state and focal conic states may be similar to those within the liquid crystal layer 230B, and thus details thereof are not be repeated here.

In some embodiments, the substrates 231B, 232B, 231G, 232G, 231R, and 232R may be implemented using a transmissive material, such as polycarbonate (PC), glass, polyethylene terephthalate (PET) film, etc., enabling them to transmit light. Additionally, the light absorbing layer 240 can be disposed on a bottom surface of the substrate 232R of the display unit 22R, effectively absorbing any transmitted light on that surface to achieve dark (black) display. It should be noted that the structure of the display panel 22 shown in FIG. 3 is for purposes of description, and it can be adjusted according to practical needs.

It should be noted that during the selection stage in the PWM scanning procedure, a respective voltage is applied to each data electrodes (e.g., BDE1 to BDEM) for the scanning operation of each activated scanning electrode, allowing only one scanning electrode to intersect each data electrodes. As a result, the reflectivity-voltage (RV) curve for each pixel circuit on the activated scanning electrode may be a single RV curve, as shown by either curve 1102 in FIG. 11A or curve 1104 in FIG. 11B.

In some embodiments, the RV curve of the pixel circuits on the currently activated scanning electrode (e.g., row n) may be affected by the AC voltage pulses applied to the pixel circuits on one or more neighboring scanning electrode previously activated (e.g., rows (n-1) and (n-2)). When applying a bright-state voltage and a dark-state voltage respectively to the pixel circuits on the scanning electrodes at row (n-1) and row (n-2), the pixel circuits on the currently activated scanning electrode (e.g., row n) may have a first RV (reflectivity versus voltage, where the voltage herein refers to the absolute voltage difference or voltage amplitude) curve and a second RV curve, as shown by curve 1004 and curve 1002 in FIG. 10A, respectively. Additionally, a voltage interval VI1 can be determined using curves 1002 and 1004 within region 1010. The brightness value of the pixel circuits on the currently activated scanning electrode can be adjusted by applying an appropriate voltage, which is selected from the voltage interval VI1, to the data electrodes BDE1 to BDEM during the manipulation stage. The most appropriate voltage interval for each display unit 22B, 22G, and 22R within the display panel 22 can be found by adjusting a variety of driving parameters during the manipulation stage. The driving parameters may include, but are not limited to duration (or period) of driving AC voltage pulses, temperature and viscosity of the ChLC molecules, driving capability of the driving circuit section, pitches of ChLC helical structures, etc.

In some embodiments, the voltage interval VI1 can be determined using more than two RV curves corresponding to different AC voltage pulses applied to the pixel circuits on the activated scanning electrodes BSE1 to BSEN. For example, the voltage interval VI1 can be obtained using four RV curves corresponding to four different voltages (e.g., applying different AC voltages to the pixels on four previous scanning electrodes at rows (n-1) to (n-4)). The specific range of these four different voltages may vary depending on the characteristics of the ChLC molecules.

In some embodiments, the manipulation stage is not limited to a single waveform and voltage. It can incorporate multiple waveforms and voltages, as well as different frequencies (or different periods, where the period is the inverse of the frequency), to adjust the voltage interval derived from multiple RV curves. For example, AC waveform 1 with voltage amplitude 1 and frequency 1 can be used for driving during the manipulation stage. Additionally, AC waveform 2 with voltage amplitude 2 and frequency 2 can be used in the manipulation stage in conjunction with the selection stage for driving. The modulation of voltage amplitude, waveform, or frequency (or period) modulation is primarily utilized to adjust the size and position of the voltage interval derived from the RV curves. By applying the proposed method, curves 1002 and 1004 depicted in FIG. 10A can be adjusted to yield curves 1008 and 1006 shown in FIG. 10B, respectively. It should be noted that the voltage interval VI2 shown in region 1012 of FIG. 10B is less than the voltage interval VI1 shown in FIG. 10A, suggesting that the utilization of curves 1006 and 1008 may lead to improved image quality and better gradation.

In some embodiments, the manipulation stage may include an operation region, a sleep region, and a half-influence region, which can be defined using different voltage ranges. For example, the voltage amplitude (i.e., the voltage difference between the activated scanning electrode and the data electrode) of the AC voltage pulse within the operation region may exceed 28V (but is lower than the upper limit of 48V) at the temperature of approximately 20°C to 30°C, indicating that the AC voltage pulse within the operation region being higher than +28V and lower than -28V. Additionally, the voltage amplitude of the AC voltage pulse within the sleep region may be lower than 18V at the temperature of approximately 20°C to 30°C, indicating that the voltage of the sleep region is between approximately -18V and +18V. In an embodiment, the voltage amplitude of the AC voltage pulse within the half-influence region may be between approximately 14V and 32V at the temperature of approximately 20°C to 30°C, depending on the practical needs and characteristics of the ChLC molecules. In another embodiment, the voltage amplitude of the AC voltage pulse within the half-influence region may be between approximately 18V and 28V at the temperature of approximately 20°C to 30°C.

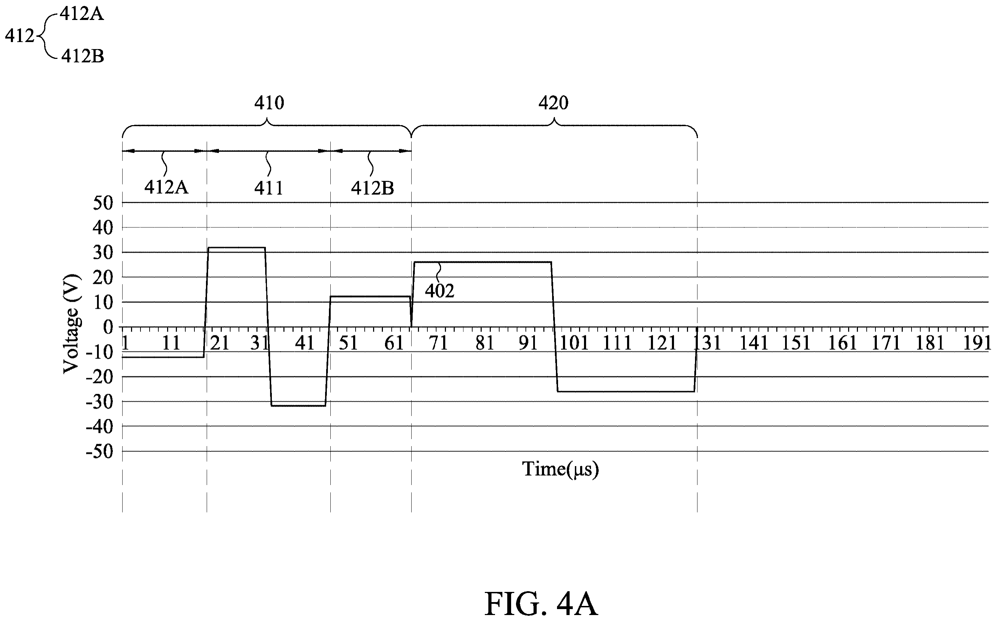

In some embodiments, the manipulation stage can be categorized into two different types. The first type includes the operation region and the sleep region. The operation region can be divided into multiple operation sub-regions, with the total duration of the operation region being equal to the combined duration of the operation sub-regions. Additionally, the sleep region can also be divided into multiple sleep sub-regions, with the total duration of the sleep region being equal to the combined duration of the sleep sub-regions. The second type includes the half-influence region. These two different types of the manipulation stage can be employed in a specific sequence during the scanning procedure of the SD+ driving mode for each scanning electrode. Additionally, the scanning procedure of the SD+ driving mode encompasses various combinations and/or order of the first type and second type of the manipulation stages, and the selection stage, which will be further elaborated in subsequent sections with reference to FIGS. 4A to 4D to FIGS. 5A to 5D.

In some embodiments, the ratio between the duration of the operation region within a single manipulation stage and the duration of the selection stage may be less than a predetermined value. In a preferred embodiment, the predetermined value is set at 0.6 or below to optimize image quality by adjusting the size and position of the voltage interval derived from the RV curves. In some embodiments, the ratio between the duration of the sleep region within a single manipulation stage and the duration of the selection stage may be higher than a predetermined value. In a preferred embodiment, the predetermined value is set at 0.4 or below to optimize image quality by adjusting the size and position of the voltage interval derived from the RV curves.

In some embodiments, the combinations and/or order of the first type and second type of the manipulation stage, and the selection stage include the following cases: (1) one first-type manipulation stage plus the selection stage; (2) two consecutive first-type manipulation stages plus the selection stage; (3) two consecutive second-type manipulation stages plus the selection stage; (4) one first-type manipulation stage plus the selection stage plus the second-type manipulation stage.

FIGS. 4A to 4D are waveform diagrams illustrating the driving voltage applied to the pixel circuits over time in accordance with an embodiment of the present disclosure.

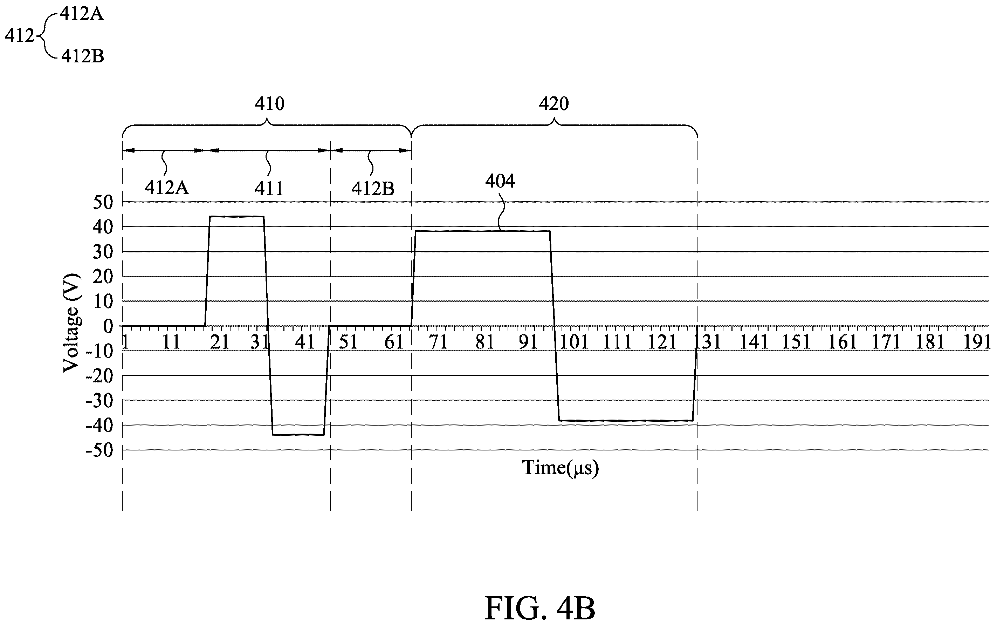

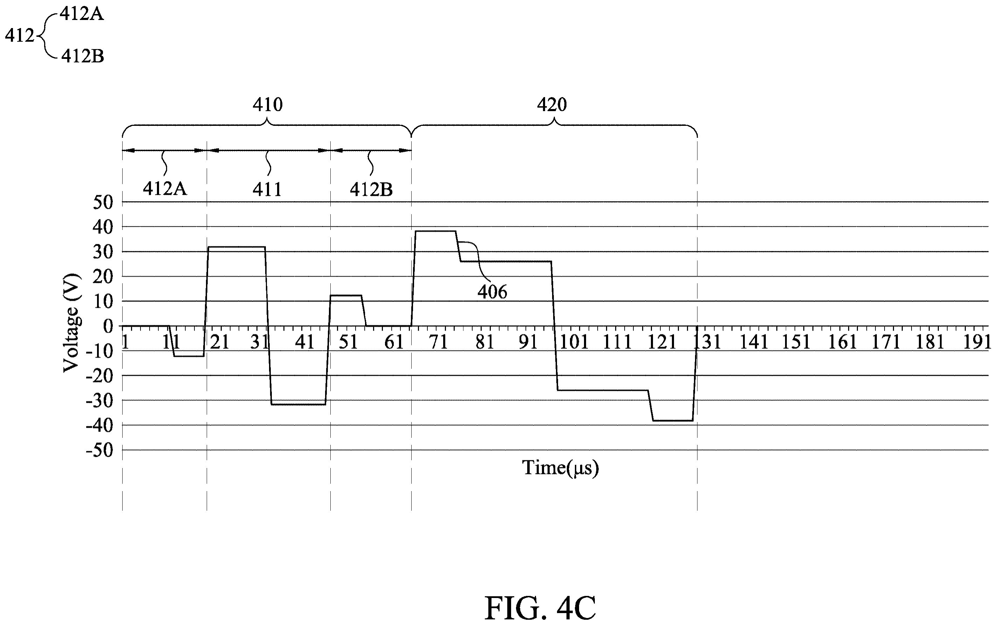

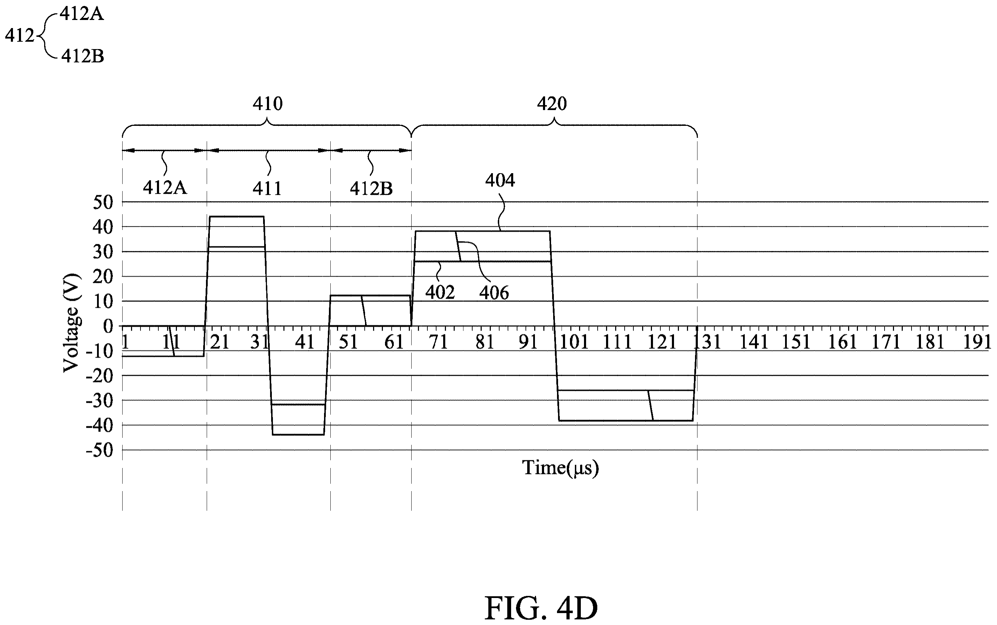

The scanning procedure shown in FIGS. 4A to 4D corresponds to Case (1). In some embodiments, the scanning procedure of the SD+ driving mode (e.g., SD+ scanning procedure) of each activated scanning electrode may include stages 410 and 420 arranged in sequence, as shown in FIG. 4A. Stage 410 may refer to the manipulation stage including an operation region 411 and a sleep region 412 (including sub-regions 412A and 412B) which refer to an operation region and a sleep region. Stage 420 may refer to the selection stage. For clarity, curves 402, 404, and 406, that respectively illustrate the dark-state voltage, bright-state voltage, and gray-state voltage applied to the pixel circuit on the activated scanning electrode over time, are separately shown in FIGS. 4A, 4B, and 4C, respectively. Additionally, curves 402, 404, and 406 are collectively shown in FIG. 4D for reference. It should be noted that the non-selection stage following the last stage (e.g., stage 420) in the SD+ scanning procedure is not explicitly shown in FIGS. 4A to 4D.

For example, referring to FIG. 4A, the amplitudes of the dark-state voltage sensed by the pixel circuit on the activated scanning electrode in operation region 411 and sleep region 412 (including sub-regions 412A and 412B) in stage 410 (e.g., manipulation stage) are approximately 32.4V and 12.2V, respectively. Additionally, the amplitude of the dark-state voltage sensed by the pixel circuit on the activated scanning electrode in stage 420 (e.g., selection stage) is approximately 26.4V. It should be noted that the ratio between the duration of operation region 411 and the duration of stage 420 (e.g., selection stage) is approximately 0.5, while the ratio between the duration of sleep region 412 and the duration of stage 420 is also approximately 0.5.

Referring to FIG. 4B, the amplitudes of the bright-state voltages sensed by the pixel circuit on the activated scanning electrode in operation region 411 and sleep region 412 (including sub-regions 412A and 412B) in stage 410 are approximately 44.4V and OV, respectively. Additionally, the amplitude of the bright-state voltage sensed by the pixel circuit on the activated scanning electrode in stage 420 (e.g., selection stage) is approximately 38.4V.

Accordingly, the voltage amplitude sensed by the pixel circuit on the activated scanning electrode in the operation region of stage 410 is between 44.4V and 32.4V, while the voltage amplitude sensed by the pixel circuit on the activated scanning electrode in the sleep region of stage 410 is between 0 and 12.2V. In addition, the voltage amplitude sensed by the pixel circuit on the activated scanning electrode in stage 420 is between 26.4V and 38.4V. Therefore, curve 406 can be derived from the range between curves 402 and 404, as depicted in FIGS. 4C and 4D.

More specifically, the SD+ scanning procedure incorporates a manipulation stage, allowing the selection of an appropriate voltage from the voltage interval between the RV curves corresponding to two or more different voltages. This voltage is used to drive the pixel circuits on the activated scanning electrode during the manipulation stage or the selection stage. As a result, the grayscale screen can be generated with a reduced duration of the selection stage and improved grayscale display capability compared to the PWM scanning procedure.

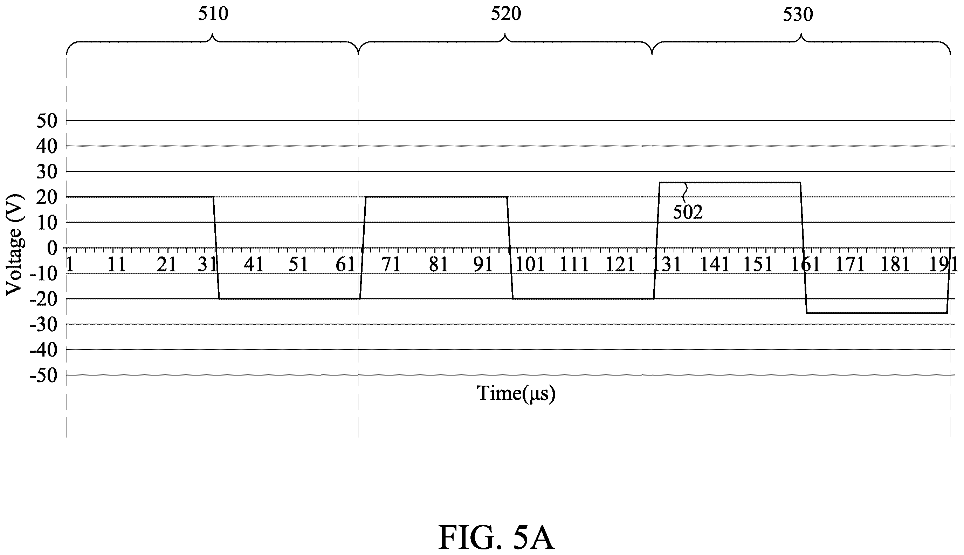

FIGS. 5A to 5D are waveform diagrams illustrating the driving voltage applied to the pixel circuits over time in accordance with another embodiment of the present disclosure.

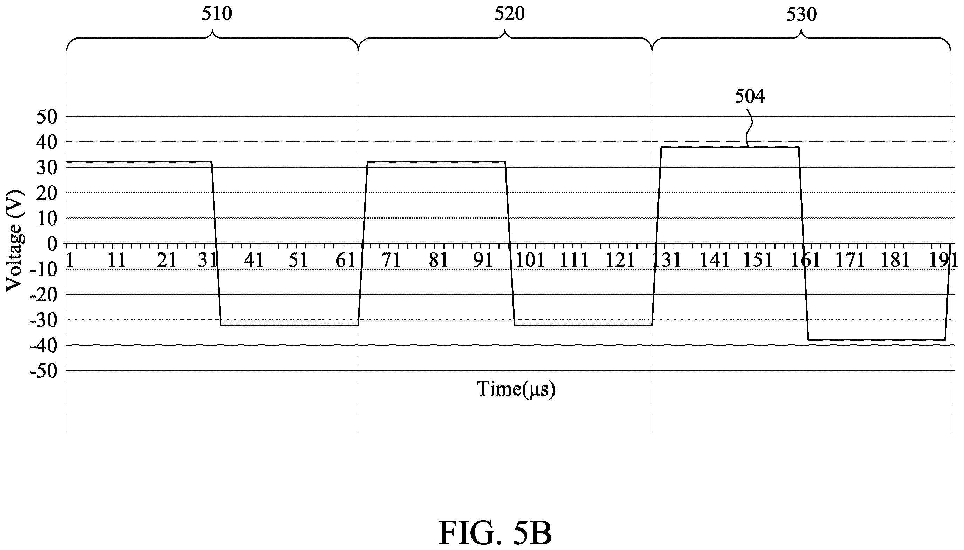

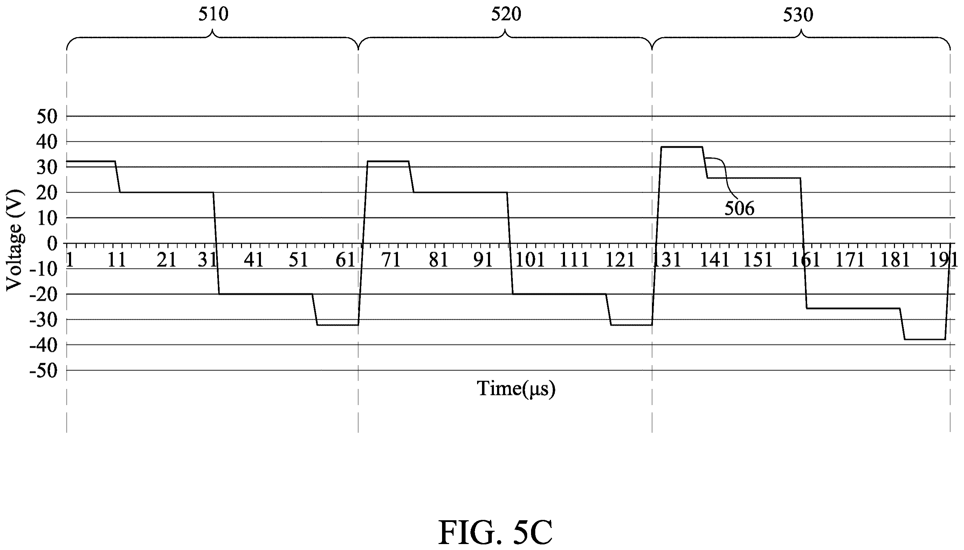

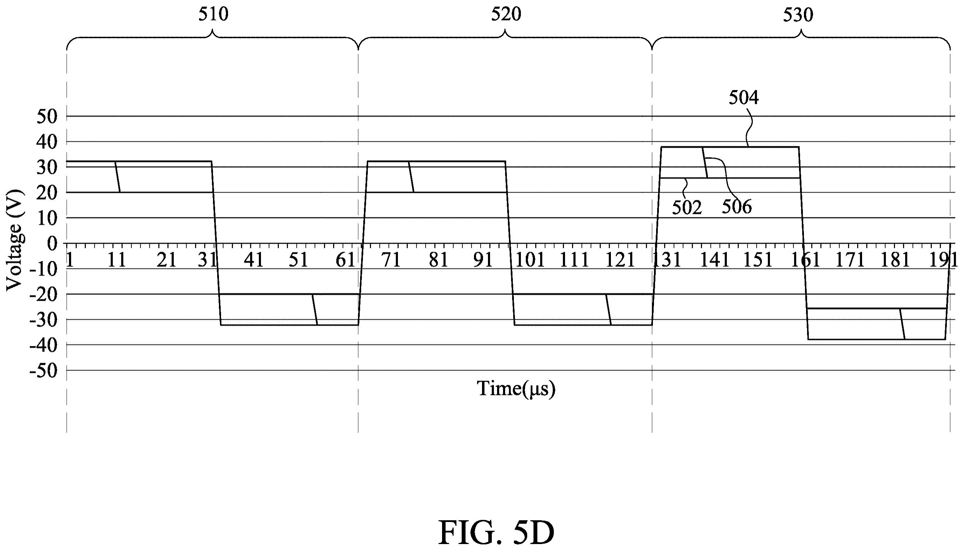

The scanning procedure shown in FIGS. 5A to 5D corresponds to Case (2). In some embodiments, the PWM scanning procedure of each activated scanning electrode may include stages 510, 520, and 530 arranged in sequence. Stages 510 and 520 may refer to a first manipulation stage and a second manipulation stage, respectively, each including a half-influence region. Stage 530 may refer to a selection stage. Stage 530 shown in FIGS. 5A-5D may be similar to stage 420 shown in FIGS. 4A-4D, and thus the details thereof will not be repeated here. For clarity, curves 502, 504, and 506, that respectively illustrate the dark-state voltage, bright-state voltage, and gray-state voltage applied to the pixel circuit on the activated scanning electrode over time, are separately shown in FIGS. 5A, 5B, and 5C, respectively. Additionally, curves 502, 504, and 506 are collectively shown in FIG. 5D for reference. It should be noted that stage 510 can be omitted in some embodiments, and one manipulation stage including the half-influence region is arranged prior to the selection stage.

In some embodiments, the voltage amplitude of the half-influence region may be within an intermediate voltage amplitude range (e.g., 14V to 32V). Referring to FIG. 5A, the amplitude of the dark-state voltage sensed by the pixel circuit on the activated scanning electrode in stages 510 and 520 is approximately 20.4V. Additionally, the amplitude of the dark-state voltage sensed by the pixel circuit on the activated scanning electrode in stage 530 (e.g., selection stage) is approximately 26.4V.

Referring to FIG. 5B, the amplitude of the bright-state voltage sensed by the pixel circuit on the activated scanning electrode in stages 510 and 520 is approximately 32.4V. Additionally, the amplitude of the bright-state voltage sensed by the pixel circuit on the activated scanning electrode in stage 530 (e.g., selection stage) is approximately 38.4V. Accordingly, the voltage amplitude sensed by the pixel circuit on the activated scanning electrode in stage 530 is approximately between 26.4V and 38.4V. In comparison with the PWM scanning procedure, the SD+ scanning scheme in Case (2) can also reduce the duration of the selection stage by utilizing manipulation stages, including the half-influence region.

In some embodiments, the second-type manipulation stages and the selection stage for Case (3) can be referred to stage 520 in FIG. 5D and stage 420 in FIG. 4D, respectively. Additionally, the first-type manipulation stage, selection stage, and second-type manipulation stage for Case (4) can be referred to stage 410 in FIG. 4D, stage 520 in FIG. 5D, and stage 420 in FIG. 4D, respectively. Thus, the detailed waveforms for Case (3) and Case (4) are omitted here.

In some embodiments, the SD+ driving mode can enhance the image quality and gradation of pixels rendered by the display panel 22. However, it may require a longer duration to update the entire screen displayed on the display panel 22, such as approximately 1.5 seconds for XGA (e.g., 1024x768) resolution, compared to the DDS driving mode. Additionally, the gradation of the image rendered by the display panel 22 using the SD+ driving mode remains highly stable across a wide temperature range, which is superior to the gradation achieved using the DDS driving mode, which operates within a narrower temperature range.

FIGS. 6A-1 to 6A-4 are waveform diagrams illustrating a first-type manipulation stage within the SD+ scanning procedure in an embodiment of the present disclosure. FIGS. 6B-1 to 6B-4 are waveform diagrams illustrating a selection stage within the SD+ scanning procedure in an embodiment of the present disclosure. FIGS. 6C-1 to 6C-4 are waveform diagrams illustrating a first-type non-selection stage within the SD+ scanning procedure in an embodiment of the present disclosure.

In some embodiments, the SD+ driving mode is a modified pulse width modulation (PWM) driving mode. In comparison with the PWM driving mode, the SD+ scanning procedure for each pixel circuit on an activated scanning electrode includes a manipulation stage, a selection stage, and a non-selection stage arranged in sequence. The waveforms corresponding to the manipulation stage, selection stage, and non-selection stage are shown in FIGS. 6A-1 to 6A-4, 6B-1 to 6B-4, and 6C-1 to 6C-4, respectively.

For purposes of description, the manipulation stage and the non-selection stage within the SD+ scanning procedure can be regarded as a first-type manipulation stage and a first-type non-selection stage, which are labeled as stage 610 and stage 630, as shown in FIGS. 6A-1 to 6A-4 and FIGS. 6C-1 to 6C-4, respectively. The selection stage within the SD+ scanning procedure are labeled as stage 620 in FIGS. 6A-1 to 6A-4, 6B-1 to 6B-4, and FIGS. 6C-1 to 6C-4. Additionally, the first-type manipulation stage, selection stage, first-type non-selection stage within the SD+ scanning procedure have equal durations T (e.g., T1 to T8). The stages of the pixel circuits on four adjacent scan lines (e.g., four adjacent scanning electrodes) during the SD+ scanning procedure have equal durations and can be arranged in a pipelined manner, as shown in Table 1. It should be noted that four adjacent scan lines are for purposes of description, and the display panel 22 can include more scan lines. For example, during time interval T1, scan lines 1 to 4 are within the first-type manipulation stage (MP1), first-type non-selection stage (NS1), first-type non-selection stage (NS1), and first-type non-selection stage (NS1), respectively. During time interval T2, scan lines 1 to 4 are within the selection stage, first-type manipulation stage (MP1), first-type non-selection stage (NS1), and first-type non-selection stage (NS1), respectively. During time interval T3, scan lines 1 to 4 are within the first-type non-selection stage (NS1), selection stage, first-type manipulation stage (MP1), and first-type non-selection stage (NS1), respectively. During time interval T4, scan lines 1 to 4 are within the first-type non-selection stage (NS1), first-type non-selection stage (NS1), selection stage, and first-type manipulation stage (MP1).

**Table 1**

| Scan Line | T1 | T2 | T3 | T4 | T5 | T6 | T7 | T8 |
|---|---|---|---|---|---|---|---|---|
| 1 | MP1 | SEL | NS1 | NS1 | NS1 | NS1 | NS1 | NS1 |
| 2 | NS1 | MP1 | SEL | NS1 | NS1 | NS1 | NS1 | NS1 |
| 3 | NS1 | NS1 | MP1 | SEL | NS1 | NS1 | NS1 | NS1 |
| 4 | NS1 | NS1 | NS1 | MP1 | SEL | NS1 | NS1 | NS1 |

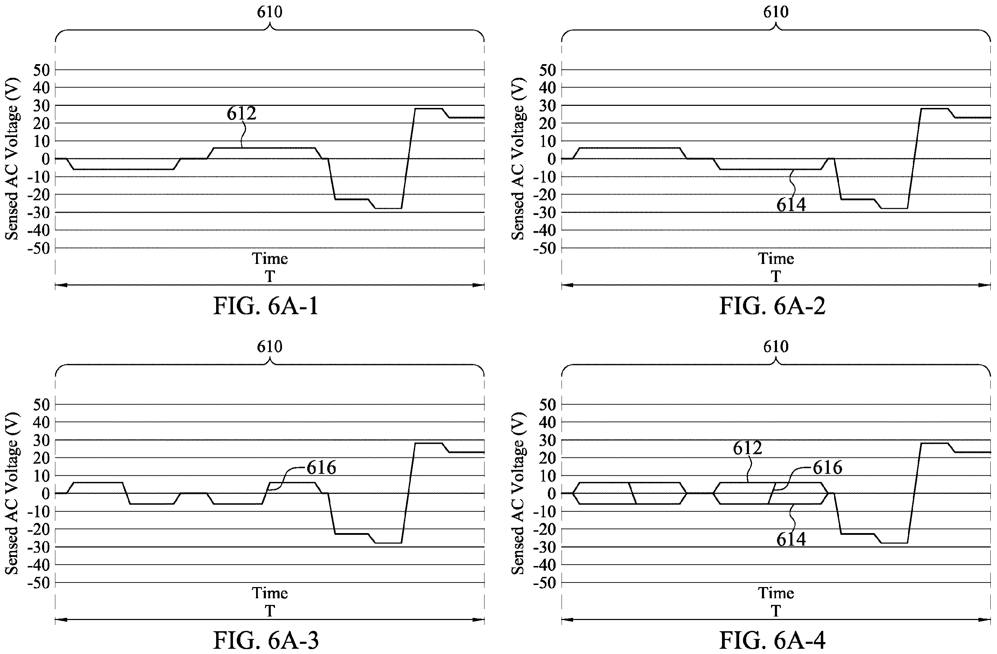

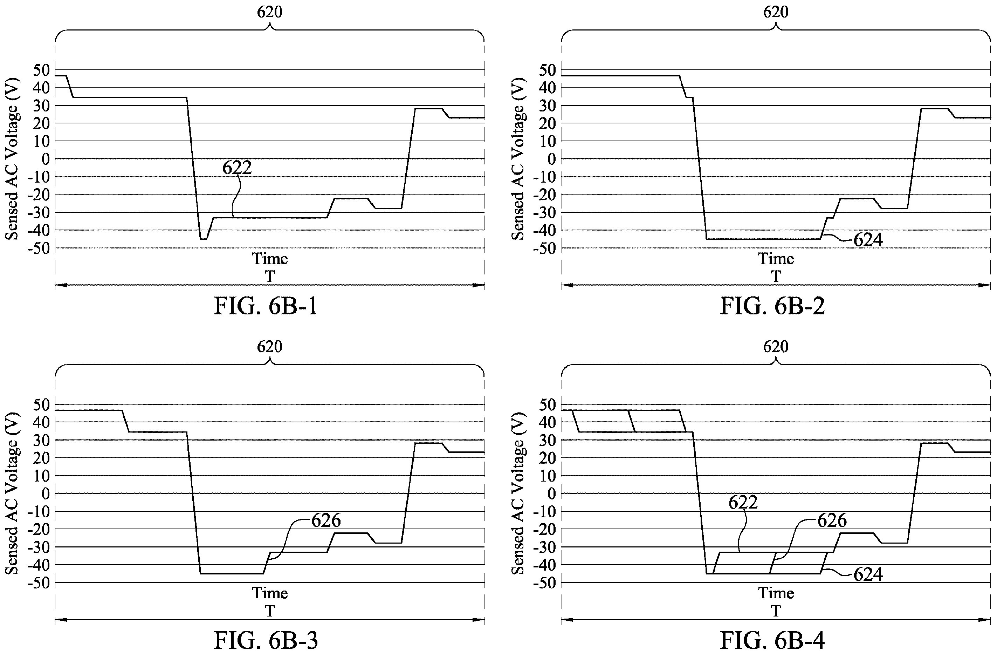

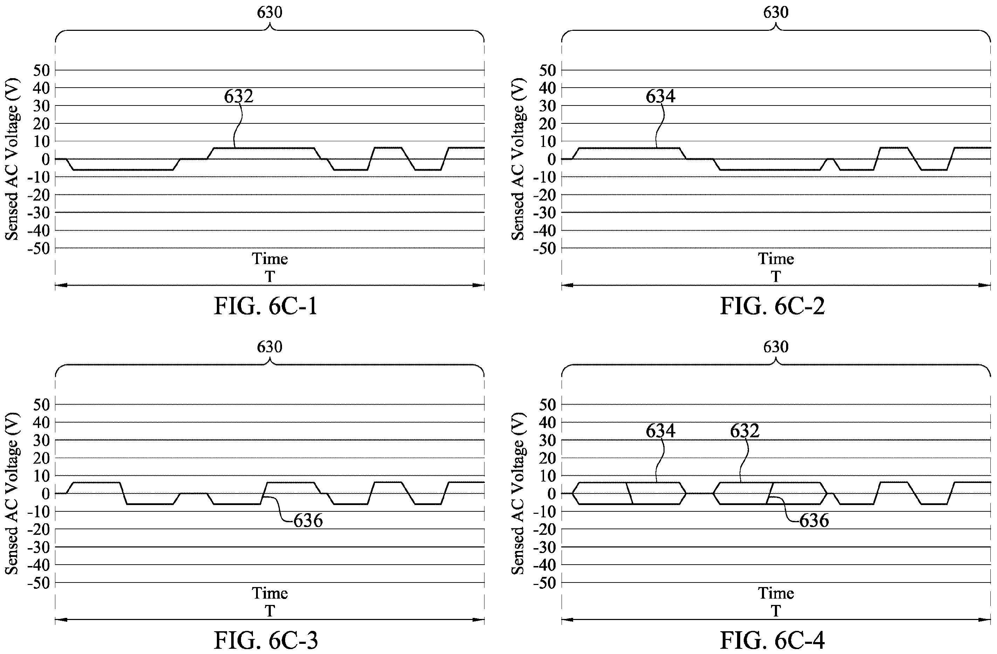

In FIGS. 6A-1 to 6A-3, curves 612, 614, and 616 are regarded as a dark-state voltage, a bright-state voltage, and grayscale voltage applied to a pixel circuit on the activated scanning electrode during the first-type manipulation stage (MP1), respectively. Additionally, curves 612, 614, and 616 are collectively shown in FIG. 6A-4. In FIGS. 6B-1 to 6B-3, curves 622, 624, and 626 are regarded as a dark-state voltage, a bright-state voltage, and grayscale voltage applied to a pixel circuit on the activated scanning electrode during the selection stage (SEL), respectively. Additionally, curves 622, 624, and 626 are collectively shown in FIG. 6B-4. In FIGS. 6C-1 to 6C-3, curves 632, 634, and 636 are regarded as a dark-state voltage, a bright-state voltage, and grayscale voltage applied to a pixel circuit on the activated scanning electrode during the first-type non-selection stage (NS1), respectively. Additionally, curves 632, 634, and 636 are collectively shown in FIG. 6C-4.

In some embodiments, when the SD+ driving mode is used to enhance the contrast, the reflectivity of the ChLC molecule applied with the bright-state voltage and the dark-state voltage may be 20.97% and 2.29%, respectively, resulting in the contrast ratio being (20.97/2.29)=9.15. In some other embodiments, when the SD+ driving mode is used to enhance the brightness with increase voltages, the reflectivity of the ChLC molecule applied with the bright-state voltage and the dark-state voltage may be 27.42% and 3.93%, respectively, resulting in the contrast ratio being (27.42/3.93)=6.97.

FIGS. 7A-1 to 7A-4 are waveform diagrams illustrating a first-type manipulation stage within the HCSD+ scanning procedure in a first embodiment of the present disclosure. FIGS. 7B-1 to 7B-4 are waveform diagrams illustrating a selection stage within the HCSD+ scanning procedure in the first embodiment of the present disclosure. FIGS. 7C-1 to 7C-4 are waveform diagrams illustrating a second-type non-selection stage within the HCSD+ scanning procedure in the first embodiment of the present disclosure.

In the first embodiment, the HCSD+ scanning procedure for each pixel circuit on an activated scanning electrode includes an a first-type manipulation stage (MP1), a selection stage (SEL), and a second-type non-selection stage (NS2) arranged in sequence, compared to the SD+ driving mode. The waveforms of the first-type manipulation stage (MP1), selection stage (SEL), and second-type non-selection stage (NS2) are shown in FIGS. 7A-1 to 7A-4, 7B-1 to 7B-4, and 7C-1 to 7C-4, respectively. For purposes of description, the second-type non-selection stage (NS2) within the HCSD+ scanning procedure is labeled as stage 730 in FIGS. 7C-1 to 7C-4, respectively. Additionally, the first-type manipulation stage, selection stage, and second-type non-selection stage within the HCSD+ scanning procedure have equal durations T. The stages of the pixel circuits on four adjacent scan lines during the HCSD+ scanning procedure have equal durations and can be arranged in a pipelined manner, as shown in Table 2.

**Table 2**

| Scan Line | T1 | T2 | T3 | T4 | T5 | T6 | T7 | T8 |
|---|---|---|---|---|---|---|---|---|
| 1 | MP1 | SEL | NS2 | NS2 | NS2 | NS2 | NS2 | NS2 |
| 2 | NS2 | MP1 | SEL | NS2 | NS2 | NS2 | NS2 | NS2 |
| 3 | NS2 | NS2 | MP1 | SEL | NS2 | NS2 | NS2 | NS2 |
| 4 | NS2 | NS2 | NS2 | MP1 | SEL | NS2 | NS2 | NS2 |

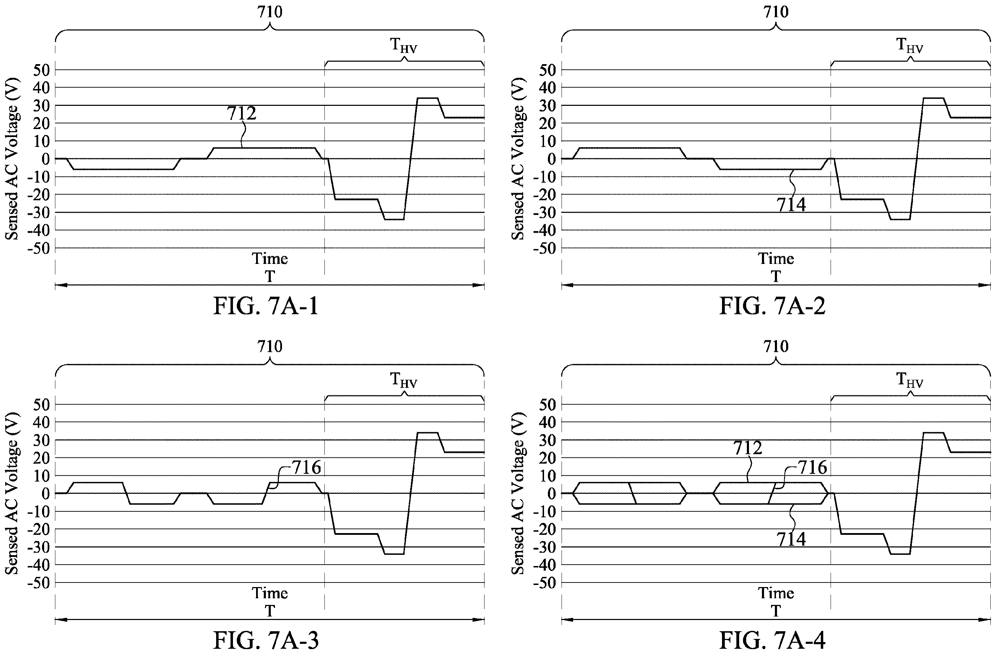

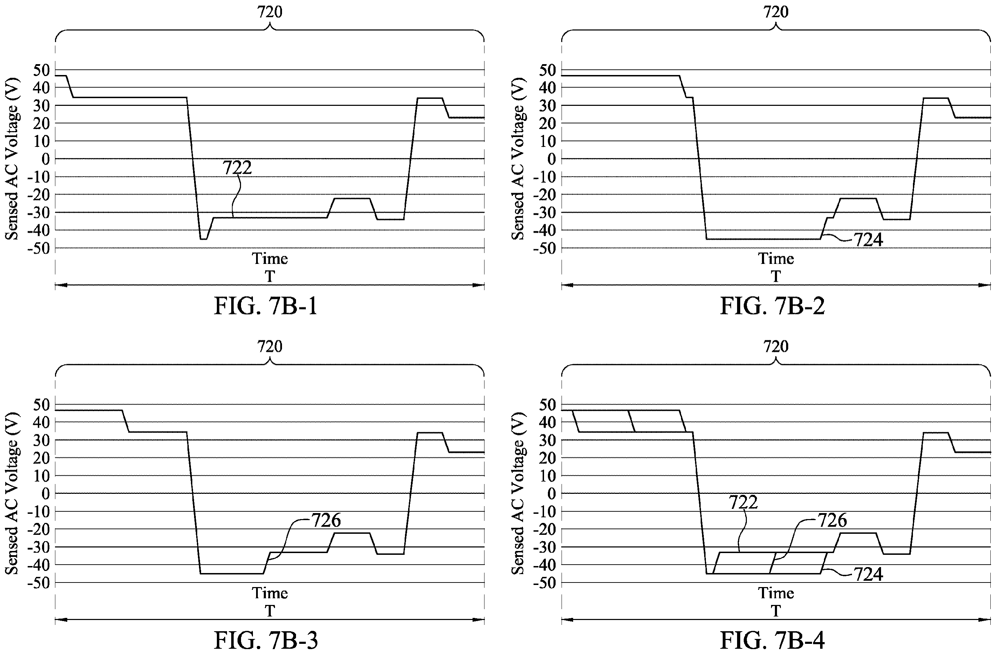

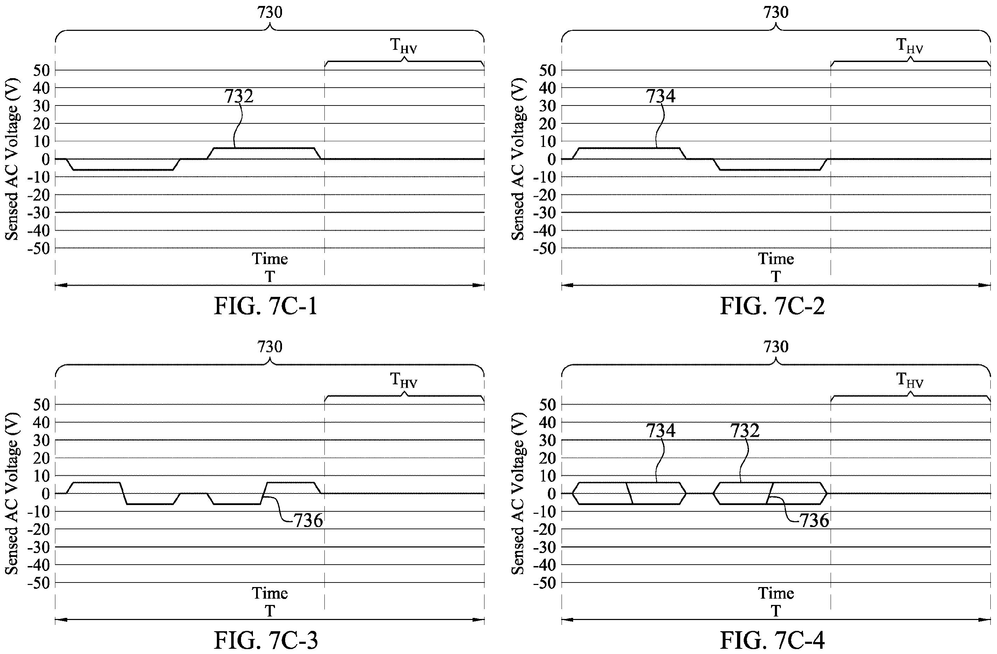

In FIGS. 7A-1 to 7A-3, curves 712, 714, and 716 are regarded as a dark-state voltage, a bright-state voltage, and grayscale voltage applied to a pixel circuit on the activated scanning electrode during the first-type manipulation stage (MP1), respectively. Additionally, curves 712, 714, and 716 are collectively shown in FIG. 7A-4. In FIGS. 7B-1 to 7B-3, curves 722, 724, and 726 are regarded as a dark-state voltage, a bright-state voltage, and grayscale voltage applied to a pixel circuit on the activated scanning electrode during the selection stage (SEL), respectively. Additionally, curves 722, 724, and 726 are collectively shown in FIG. 7B-4. In FIGS. 7C-1 to 7C-3, curves 732, 734, and 736 are regarded as a dark-state voltage, a bright-state voltage, and grayscale voltage applied to a pixel circuit on the activated scanning electrode during the first-type non-selection stage (NS1), respectively. Additionally, curves 732, 734, and 736 are collectively shown in FIG. 7C-4.

More specifically, during time interval T1, when the pixel circuits on scan line 1 are within the first-type manipulation stage (MP1), the pixel circuits on scan lines 2 to 4 are within the second-type non-selection stage (NS2). During time interval T_{HV} within the first-type manipulation stage (MP1) of the pixel circuits on scan line 1, the voltage curve 714 for the bright-state voltage has high voltage amplitude. Meanwhile, the scanning electrode driving circuit 221 may apply the common AC voltage pulses substantially identical to the data voltage pulses, which are applied to the ChLC molecules of the pixel circuits on scan lines 2 to 4, resulting in the ChLC molecules not sensing any voltage (e.g., 0V) during time interval T_{HV} within the second-type non-selection stage (NS2) for the pixel circuits on scan lines 2 to 4 no matter whether the dark-state voltage, grayscale voltage, or bright-state voltage is used.

Similarly, when the pixel circuits on scan line 2 are within the first-type manipulation stage (MP1), the pixel circuits on scan lines 3 to 4 are within the second-type non-selection stage (NS2), and the pixel circuits on scan line 1 are within the selection stage (SEL). The scanning electrode driving circuit 221 may apply the common AC voltage pulses substantially identical to the data voltage pulses, which are applied to the ChLC molecules of the pixel circuits on scan lines 3 to 4, resulting in the ChLC molecules not sensing any voltage (e.g., 0V) during time interval T_{HV} within the second-type non-selection stage (NS2) for the pixel circuits on scan lines 3 to 4 no matter whether the dark-state voltage, grayscale voltage, or bright-state voltage is used. It should be noted that the voltage pulses within the selection stage of the pixel circuits on scan line 1 are not affected by the first-type manipulation stage (MP1) of the pixel circuits on scan line 2.

Specifically, when the pixel circuits on a particular scan line are within the first-type manipulation stage (MP1), the pixel circuits, which are within the second-type non-selection stage (NS2), on the remaining scan lines will not sense any voltage (e.g., 0V) during a first period within the second-type non-selection stage, which corresponds to the high-voltage time period T_{HV} within the first-type manipulation stage of the pixel circuits on the particular scan line. In some embodiments, the reflectivity of the ChLC molecule applied with the bright-state voltage and the dark-state voltage using the HCSD+ driving mode described in the embodiments of FIGS. 7A-1 to 7A-4, 7B-1 to 7B-4, and 7C-1 to 7C-4 may be 28.16% and 2.63%, respectively, resulting in the contrast ratio being (28.16/2.63)=10.7, thereby providing a better contrast ratio than the SD+ driving mode.

FIGS. 8A-1 to 8A-4 are waveform diagrams illustrating a first-type manipulation stage within the HCSD+ scanning procedure in a second embodiment of the present disclosure. FIGS. 8B-1 to 8B-4 are waveform diagrams illustrating a selection stage within the HCSD+ scanning procedure in the second embodiment of the present disclosure. FIGS. 8C-1 to 8C-4 are waveform diagrams illustrating a first-type isolated stage within the HCSD+ scanning procedure in the second embodiment of the present disclosure. FIGS. 8D-1 to 8D-4 are waveform diagrams illustrating a second-type non-selection stage within the HCSD+ scanning procedure in the second embodiment of the present disclosure.

In the second embodiment, the HCSD+ scanning procedure for each pixel circuit on an activated scanning electrode includes an a first-type manipulation stage (MP1), a selection stage (SEL), a first-type isolated stage (ISO1), and a second-type non-selection stage (NS2) in sequence, compared to the HCSD+ driving mode described in the embodiments of FIGS. 7A-1 to 7A-4, 7B-1 to 7B-4, and 7C-1 to 7C-4. The waveforms of the first-type manipulation stage (MP1), selection stage (SEL), first-type isolated stage (ISO1), and second-type non-selection stage (NS2) are shown by stages 810, 820, 830, and 840 in FIGS. 8A-1 to 8A-4, 8B-1 to 8B-4, 8C-1 to 8C-4, and 8D-1 to 8D-4, respectively. In the first variant of the second embodiment, the stages of the pixel circuits on four adjacent scan lines during the HCSD+ scanning procedure have equal durations and can be arranged in a pipelined manner in the sequence of the first-type manipulation stage (MP1), selection stage (SEL), first-type isolated stage (ISO1), and second-type non-selection stage (NS2), as shown in Table 3.

**Table 3**

| Scan Line | T1 | T2 | T3 | T4 | T5 | T6 | T7 | T8 |
|---|---|---|---|---|---|---|---|---|
| 1 | MP1 | SEL | ISO1 | NS2 | NS2 | NS2 | NS2 | NS2 |
| 2 | NS2 | MP1 | SEL | ISO1 | NS2 | NS2 | NS2 | NS2 |
| 3 | NS2 | NS2 | MP1 | SEL | ISO1 | NS2 | NS2 | NS2 |
| 4 | NS2 | NS2 | NS2 | MP1 | SEL | ISO1 | NS2 | NS2 |

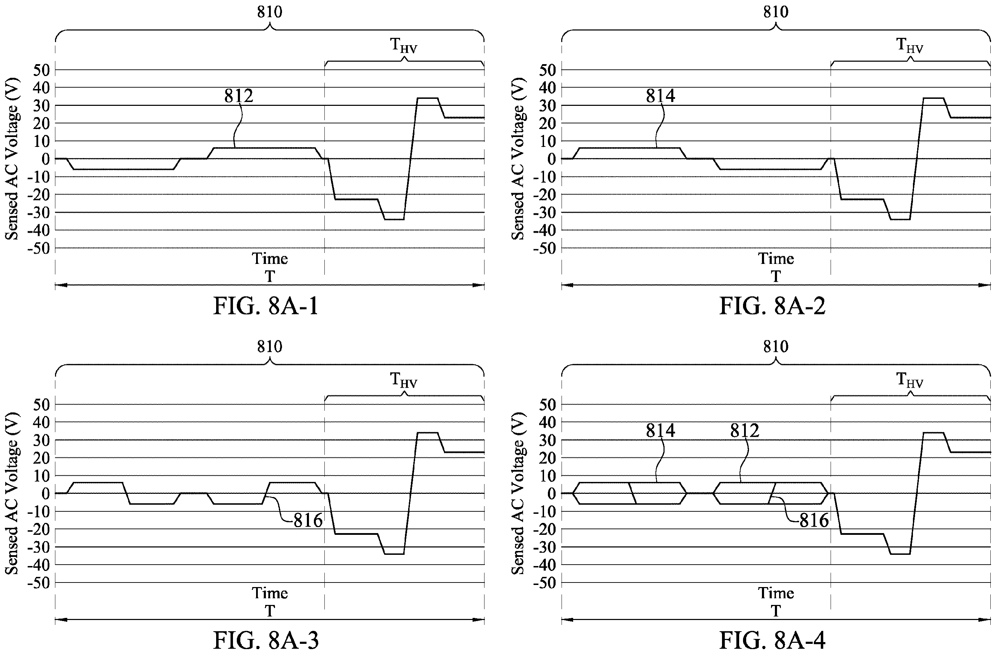

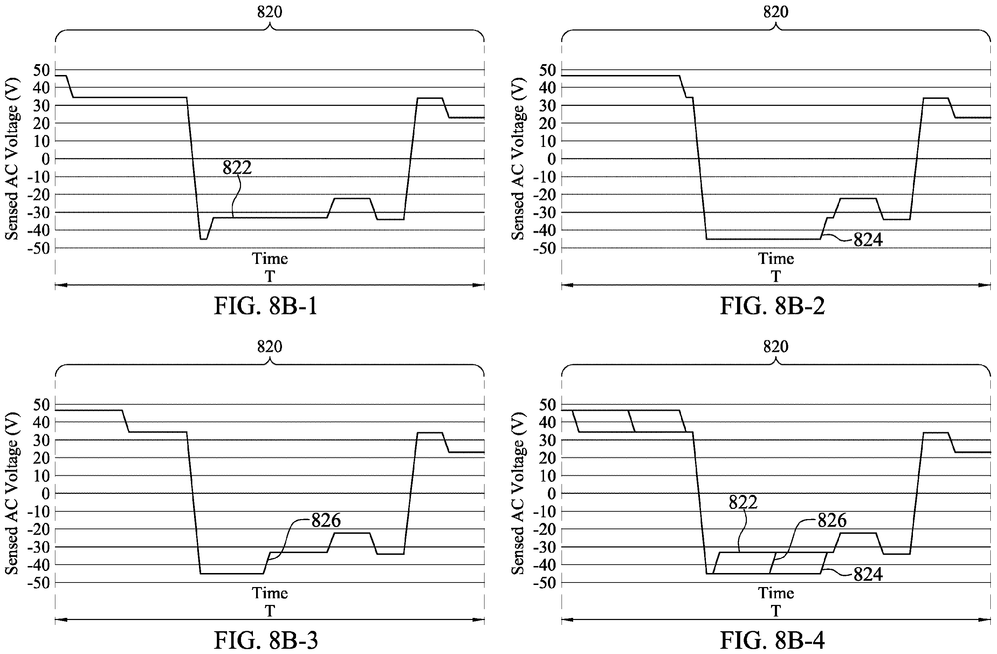

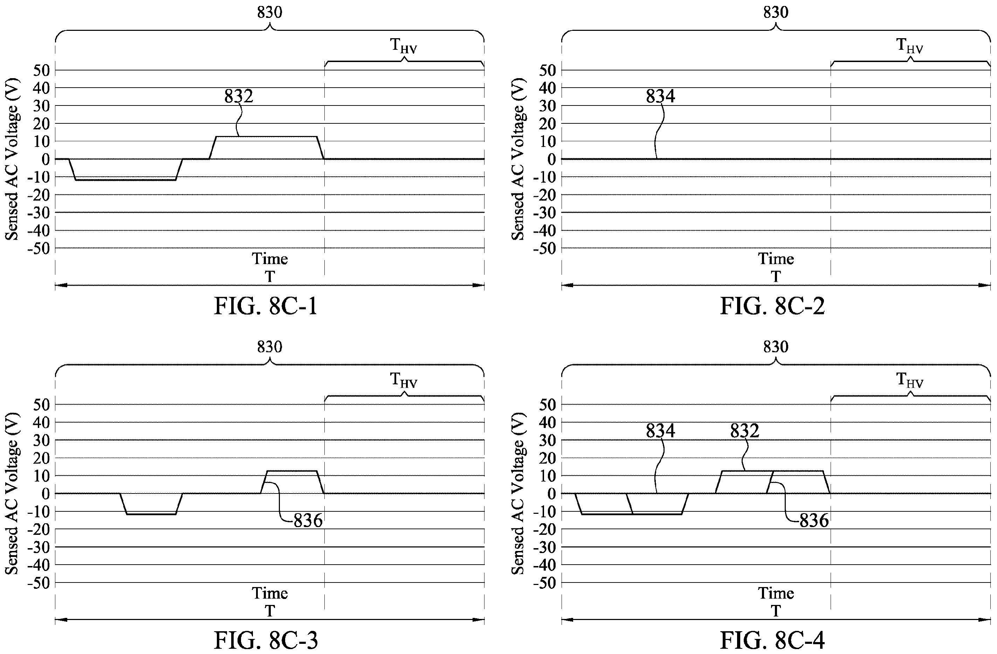

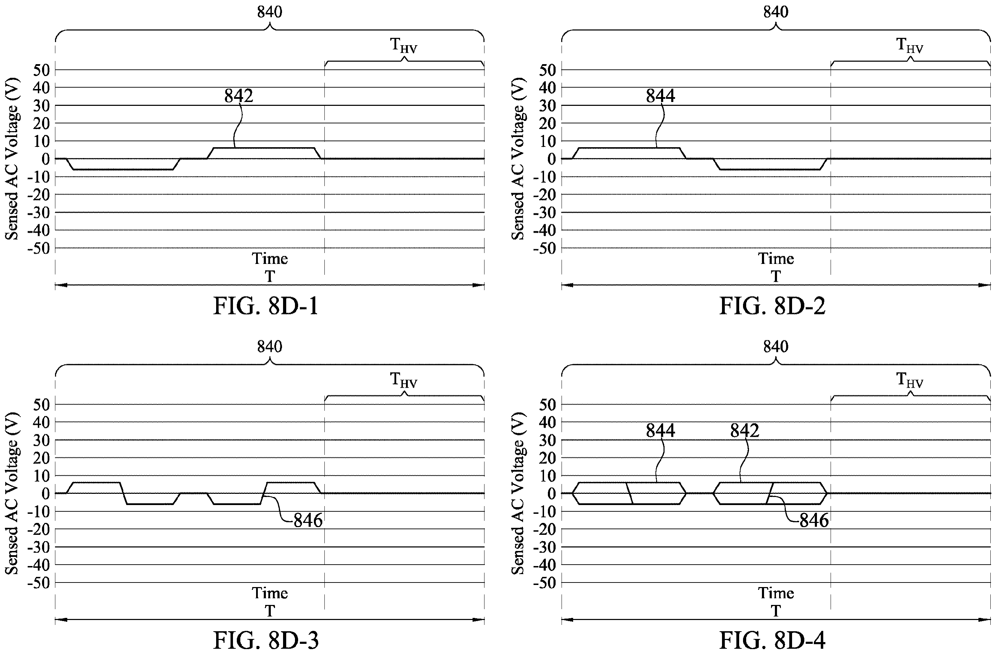

In FIGS. 8A-1 to 8A-3, curves 812, 814, and 816 are regarded as a dark-state voltage, a bright-state voltage, and grayscale voltage applied to a pixel circuit on the activated scanning electrode during the first-type manipulation stage (MP1), respectively. Additionally, curves 812, 814, and 816 are collectively shown in FIG. 8A-4. In FIGS. 8B-1 to 8B-3, curves 822, 824, and 826 are regarded as a dark-state voltage, a bright-state voltage, and grayscale voltage applied to a pixel circuit on the activated scanning electrode during the selection stage (SEL), respectively. Additionally, curves 822, 824, and 826 are collectively shown in FIG. 8B-4. In FIGS. 8C-1 to 8C-3, curves 832, 834, and 836 are regarded as a dark-state voltage, a bright-state voltage, and grayscale voltage applied to a pixel circuit on the activated scanning electrode during the first-type isolated stage (ISO1), respectively. Additionally, curves 832, 834, and 836 are collectively shown in FIG. 8C-4. In FIGS. 8D-1 to 8D-3, curves 842, 844, and 846 are regarded as a dark-state voltage, a bright-state voltage, and grayscale voltage applied to a pixel circuit on the activated scanning electrode during the second-type non-selection stage (NS2), respectively. Additionally, curves 842, 844, and 846 are collectively shown in FIG. 8D-4.

For example, when the pixel circuits on scan line 3 are within the first-type manipulation stage (MP1), the pixel circuits on scan line 1 are within the first-type isolated stage (ISO1). When the bright-state voltage (e.g., curve 814 shown in FIG. 8A-2) is applied to the pixel circuits on scan line 3, the scanning electrode driving circuit 221 may apply the common AC voltage pulses, which are substantially identical to the data voltage pulses applied to the ChLC molecules of the pixel circuits on scan line 1, resulting in the ChLC molecules of the pixel circuits on scan line 1 not sensing any voltage (e.g., 0V) within the whole duration of the first-type isolated stage (ISO1) of the pixel circuits on scan line 1. Additionally, when the dark-state voltage or grayscale voltage (e.g., curves 812 and 816 shown in FIG. 8A-1 and FIG 8A-3) is applied to the pixel circuits on scan line 3, the AC voltage difference sensed by the ChLC molecules of the pixel circuits on scan line 1 still follows the curve of the dark-state voltage or grayscale voltage before the high-voltage time period T_{HV}, and set to 0V within the high-voltage time period T_{HV}, as shown in FIGS. 8C-1 to 8C-4. The operations of the second-type non-selection stage (NS2) are similar to those described in the embodiments of FIGS. 7A-1 to 7A-4, 7B-1 to 7B-4, and 7C-1 to 7C-4, and thus the details will not be repeated here. In some embodiments, the reflectivity of the ChLC molecule applied with the bright-state voltage and the dark-state voltage using the HCSD+ driving mode shown in Table 3 may be 28.72% and 2.38%, respectively, resulting in the contrast ratio being (28.72/2.38)=12.06, thereby providing a better contrast ratio than the SD+ driving mode.

Specifically, the first-type isolated stage (ISO1) is prior to the selection stage (SEL) during the HCSD+ scanning procedure in the second variant, while the first-type isolate stage (ISO1) is subsequent to the selection stage (SEL) during the HCSD+ scanning procedure in the first variant.

In the second variant of the second embodiment, the stages of the pixel circuits on four adjacent scan lines during the HCSD+ scanning procedure have equal durations and can be arranged in a pipelined manner in the sequence of the first-type manipulation stage (MP1), first-type isolated stage (ISO1), selection stage (SEL), and second-type non-selection stage (NS2), as shown in Table 4.

**Table 4**

| Scan Line | T1 | T2 | T3 | T4 | T5 | T6 | T7 | T8 |
|---|---|---|---|---|---|---|---|---|
| 1 | MP1 | ISO1 | SEL | NS2 | NS2 | NS2 | NS2 | NS2 |
| 2 | NS2 | MP1 | ISO1 | SEL | NS2 | NS2 | NS2 | NS2 |
| 3 | NS2 | NS2 | MP1 | ISO1 | SEL | NS2 | NS2 | NS2 |
| 4 | NS2 | NS2 | NS2 | MP1 | ISO1 | SEL | NS2 | NS2 |

FIGS. 9A-1 to 9A-4 are waveform diagrams illustrating a second-type manipulation stage within the HCSD+ scanning procedure in a third embodiment of the present disclosure. FIGS. 9B-1 to 9B-4 are waveform diagrams illustrating a selection stage within the HCSD+ scanning procedure in the third embodiment of the present disclosure. FIGS. 9C-1 to 9C-4 are waveform diagrams illustrating a first-type isolated stage within the HCSD+ scanning procedure in the third embodiment of the present disclosure. FIGS. 9D-1 to 9D-4 are waveform diagrams illustrating a second-type non-selection stage within the HCSD+ scanning procedure in the third embodiment of the present disclosure.

In the third embodiment, the HCSD+ scanning procedure for each pixel circuit on an activated scanning electrode includes an a second-type manipulation stage (MP2), a selection stage (SEL), an first-type isolated stage (ISO1), and a second-type non-selection stage (NS2) in sequence, as compared to the HCSD+ driving mode described in the embodiments of FIGS. 8A-1 to 8A-4, 8B-1 to 8B-4, 8C-1 to 8C-4, and 8D-1 to 8D-4. The waveforms corresponding to the second-type manipulation stage (MP2), selection stage (SEL), first-type isolated stage (ISO1), and second-type non-selection stage (NS2) are illustrated by stages 910, 920, 930, and 940 in FIGS. 9A-1 to 9A-4, 9B-1 to 9B-4, 9C-1 to 9C-4, and 9D-1 to 9D-4, respectively. The second-type manipulation stage (MP2) can be considered as a first-type manipulation stage (MP1) with its latter portion replaced by a partial first-type isolated stage. For purposes of description, the second-type manipulation stage (MP2) is labeled as stage 910, as shown in FIGS. 9A-1 to 9A-4.

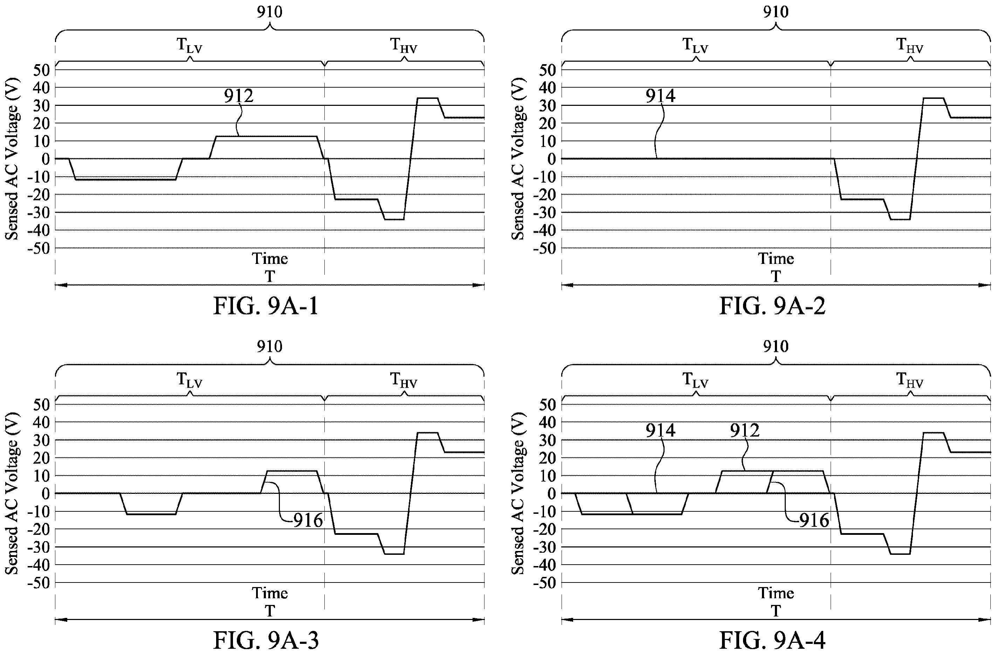

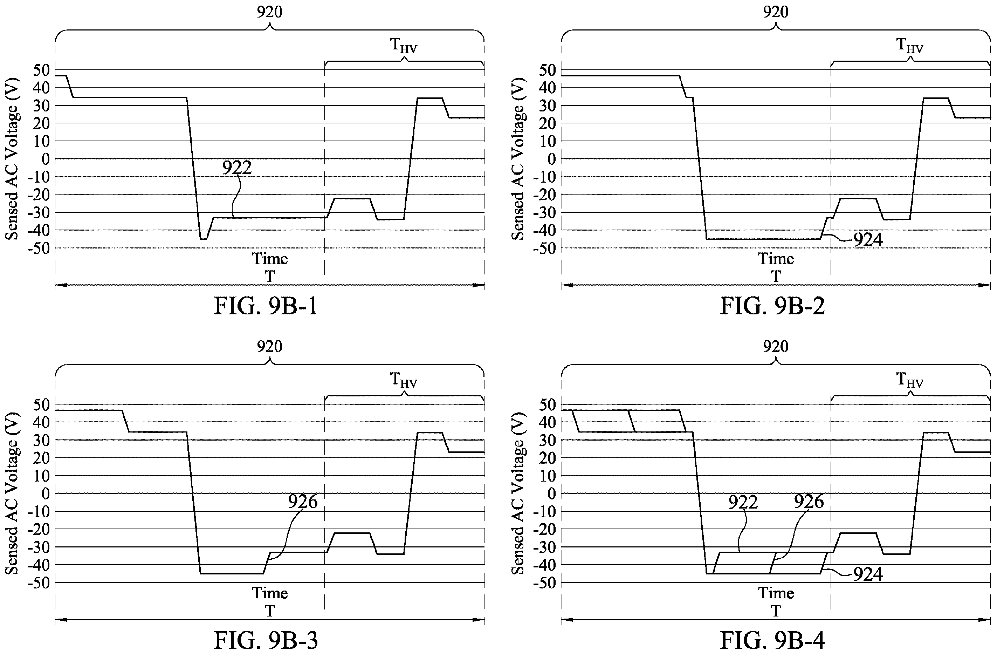

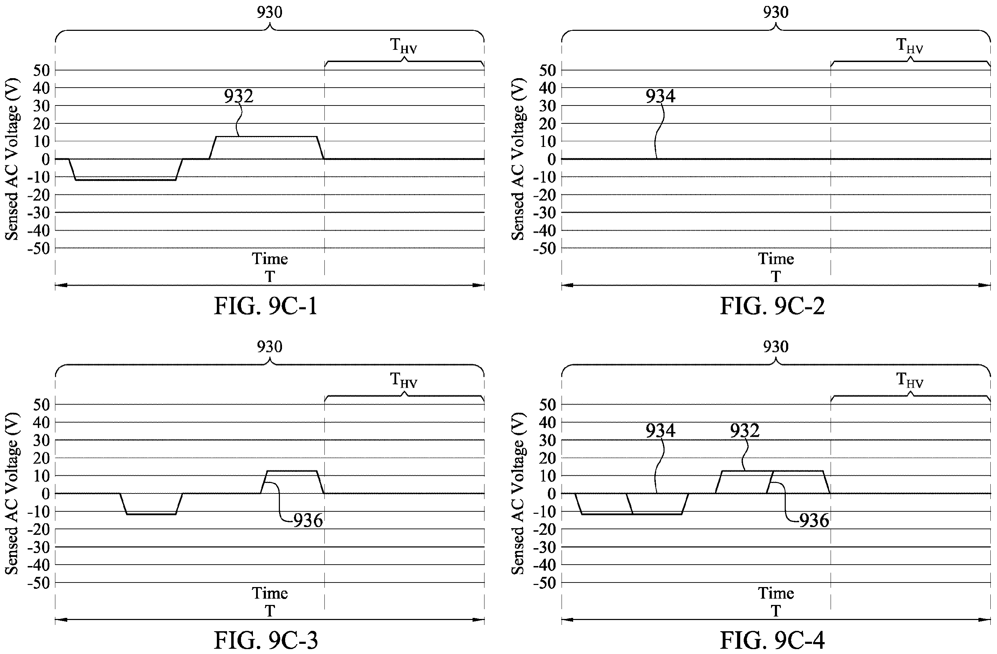

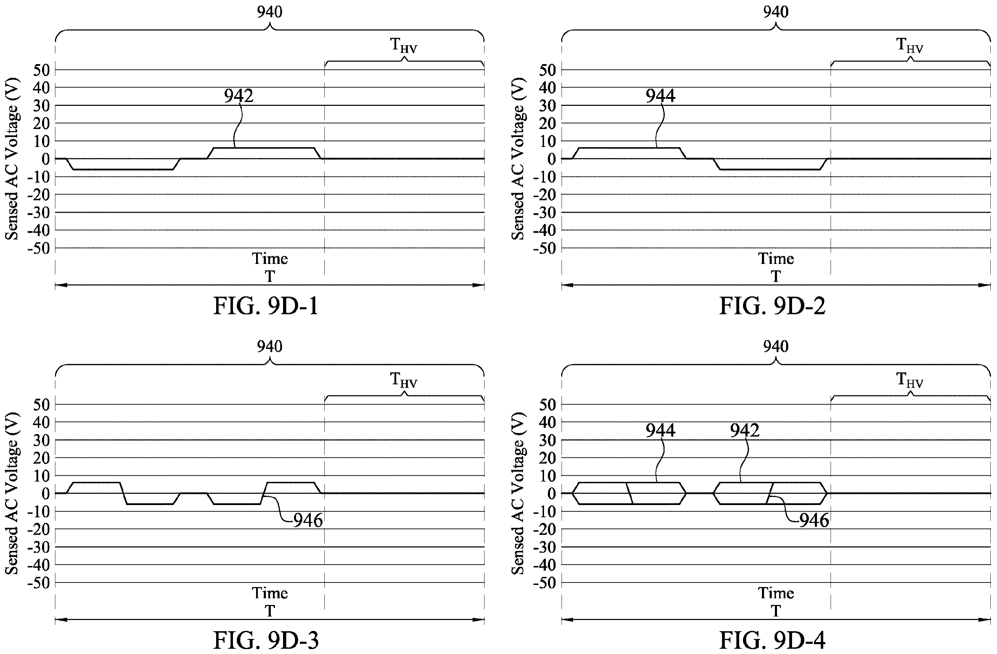

In FIGS. 9A-1 to 9A-3, curves 912, 914, and 916 are regarded as a dark-state voltage, a bright-state voltage, and grayscale voltage applied to a pixel circuit on the activated scanning electrode during the second-type manipulation stage (MP2), respectively. Additionally, curves 912, 914, and 916 are collectively shown in FIG. 9A-4. In FIGS. 9B-1 to 9B-3, curves 922, 924, and 926 are regarded as a dark-state voltage, a bright-state voltage, and grayscale voltage applied to a pixel circuit on the activated scanning electrode during the selection stage (SEL), respectively. Additionally, curves 922, 924, and 926 are collectively shown in FIG. 9B-4. In FIGS. 9C-1 to 9C-3, curves 932, 934, and 936 are regarded as a dark-state voltage, a bright-state voltage, and grayscale voltage applied to a pixel circuit on the activated scanning electrode during the first-type isolated stage (ISO1), respectively. Additionally, curves 932, 934, and 936 are collectively shown in FIG. 9C-4. In FIGS. 9D-1 to 9D-3, curves 942, 944, and 946 are regarded as a dark-state voltage, a bright-state voltage, and grayscale voltage applied to a pixel circuit on the activated scanning electrode during the second-type non-selection stage (NS2), respectively. Additionally, curves 942, 944, and 946 are collectively shown in FIG. 9D-4.

In the first variant of the third embodiment, the second-type manipulation stage (MP2), selection stage (SEL), first-type isolated stage (ISO1), and second-type non-selection stage (NS2) of the pixel circuits on four adjacent scan lines during the HCSD+ scanning procedure have equal durations T and can be arranged in a pipelined manner in the sequence of the second-type manipulation stage (MP2), selection stage (SEL), first-type isolated stage (ISO1), and second-type non-selection stage (NS2), as shown in Table 5.

**Table 5**

| Scan Line | T1 | T2 | T3 | T4 | T5 | T6 | T7 | T8 |
|---|---|---|---|---|---|---|---|---|
| 1 | MP2 | SEL | ISO1 | NS2 | NS2 | NS2 | NS2 | NS2 |
| 2 | NS2 | MP2 | SEL | ISO1 | NS2 | NS2 | NS2 | NS2 |
| 3 | NS2 | NS2 | MP2 | SEL | ISO1 | NS2 | NS2 | NS2 |
| 4 | NS2 | NS2 | NS2 | MP2 | SEL | ISO1 | NS2 | NS2 |

In the second variant of the third embodiment, the stages of the pixel circuits on four adjacent scan lines during the HCSD+ scanning procedure have equal durations and can be arranged in a pipelined manner in the sequence of the second-type manipulation stage (MP2), first-type isolated stage (ISO1), selection stage (SEL), and second-type non-selection stage (NS2), as shown in Table 6.

**Table 6**

| Scan Line | T1 | T2 | T3 | T4 | T5 | T6 | T7 | T8 |
|---|---|---|---|---|---|---|---|---|
| 1 | MP2 | ISO1 | SEL | NS2 | NS2 | NS2 | NS2 | NS2 |
| 2 | NS2 | MP2 | ISO1 | SEL | NS2 | NS2 | NS2 | NS2 |
| 3 | NS2 | NS2 | MP2 | ISO1 | SEL | NS2 | NS2 | NS2 |
| 4 | NS2 | NS2 | NS2 | MP2 | ISO1 | SEL | NS2 | NS2 |

Specifically, the first-type isolated stage (ISO1) is prior to the selection stage (SEL) during the HCSD+ scanning procedure in the second variant, while the first-type isolate stage (ISO1) is subsequent to the selection stage (SEL) during the HCSD+ scanning procedure in the first variant.

For example, referring to Table 5, when the pixel circuits on scan line 3 are within the second-type manipulation stage (MP2), the pixel circuits on scan line 1 are within the first-type isolated stage (ISO1). When the bright-state voltage (e.g., curve 914 shown in FIG. 9A-2) is applied to the pixel circuits on scan line 3, the scanning electrode driving circuit 221 may apply the common AC voltage pulses, which are substantially identical to the data voltage pulses applied to the ChLC molecules of the pixel circuits on scan line 3, resulting in the ChLC molecules of the pixel circuits on scan line 3 not sensing any voltage (e.g., 0V) during the low-voltage time period T_{LV}. In other words, the bright-state voltage sensed by the ChLC molecules of the pixel circuits on scan line 3 is set to 0V during the low-voltage time period T_{LV}. Additionally, the dark-state voltage and grayscale voltage within the second-type manipulation stage (MP2) still follow the curve 912 and curve 916 shown in FIGS. 9A-1 and 9A-3, respectively.

The operations of the first-type isolated stage (ISO1) are similar to those described in the embodiment of FIGS. 8C-1 to 8C-4, and the details thereof will not be repeated here. Furthermore, the operations of the second-type non-selection stage (NS2) are similar to those described in the embodiments of FIGS. 7A-1 to 7A-4, 7B-1 to 7B-4, and 7C-1 to 7C-4, and thus the details will not be repeated here. In some embodiments, the reflectivity of the ChLC molecule applied with the bright-state voltage and the dark-state voltage using the HCSD+ driving mode shown in Table 5 may be 28.85% and 2.48%, respectively, resulting in the contrast ratio being (28.85/2.48)=11.63, thereby providing a better contrast ratio than the SD+ driving mode.

In view of the above, by using the HCSD+ driving mode described in the first, second, and third embodiments, the display image rendered by the ChLC display device can have high contrast and high reflectivity. Furthermore, since the bright-state voltage sensed by the ChLC molecules of the pixel circuits during the second-type non-selection stage is set to OV, the power consumption of the display device can be reduced.

FIGS. 12A-1 to 12A-4 are waveform diagrams illustrating a first-type manipulation stage within the HCSD+ scanning procedure in a fourth embodiment of the present disclosure. FIGS. 12B-1 to 12B-4 are waveform diagrams illustrating a selection stage within the HCSD+ scanning procedure in the fourth embodiment of the present disclosure. FIGS. 12C-1 to 12C-4 are waveform diagrams illustrating a second-type isolated stage within the HCSD+ scanning procedure in the fourth embodiment of the present disclosure. FIGS. 12D-1 to 12D-4 are waveform diagrams illustrating a second-type non-selection stage within the HCSD+ scanning procedure in the fourth embodiment of the present disclosure.

In the fourth embodiment, the HCSD+ scanning procedure for each pixel circuit on an activated scanning electrode includes an a first-type manipulation stage (MP1), a selection stage (SEL), a second-type isolated stage (ISO2), and a second-type non-selection stage (NS2) in sequence, compared to the HCSD+ driving mode described in the embodiments of FIGS. 8A-1 to 8A-4, 8B-1 to 8B-4, 8C-1 to 8C-4, and 8D-1 to 8D-4. The waveforms of the first-type manipulation stage (MP1), selection stage (SEL), second-type isolated stage (ISO2), and second-type non-selection stage (NS2) are shown by stages 1210, 1220, 1230, and 1240 in FIGS. 12A-1 to 12A-4, 12B-1 to 12B-4, 12C-1 to 12C-4, and 12D-1 to 12D-4, respectively. In the first variant of the fourth embodiment, the stages of the pixel circuits on four adjacent scan lines during the HCSD+ scanning procedure have equal durations and can be arranged in a pipelined manner in the sequence of the first-type manipulation stage (MP1), selection stage (SEL), second-type isolated stage (ISO2), and second-type non-selection stage (NS2), as shown in Table 7.

**Table 7**

| Scan Line | T1 | T2 | T3 | T4 | T5 | T6 | T7 | T8 |
|---|---|---|---|---|---|---|---|---|
| 1 | MP1 | SEL | ISO2 | NS2 | NS2 | NS2 | NS2 | NS2 |
| 2 | NS2 | MP1 | SEL | ISO2 | NS2 | NS2 | NS2 | NS2 |
| 3 | NS2 | NS2 | MP1 | SEL | ISO2 | NS2 | NS2 | NS2 |
| 4 | NS2 | NS2 | NS2 | MP1 | SEL | ISO2 | NS2 | NS2 |

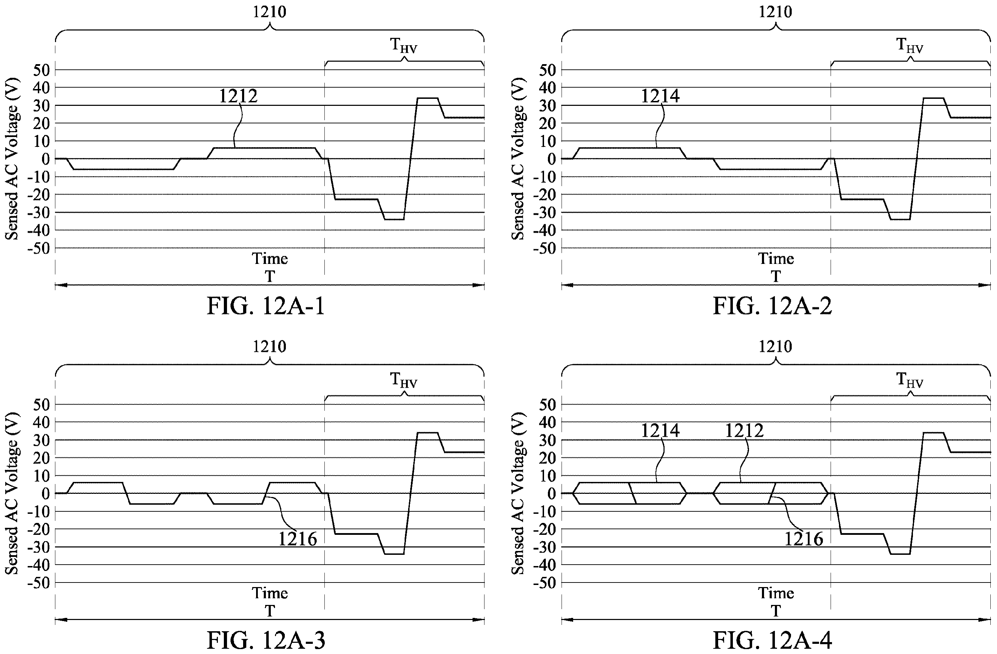

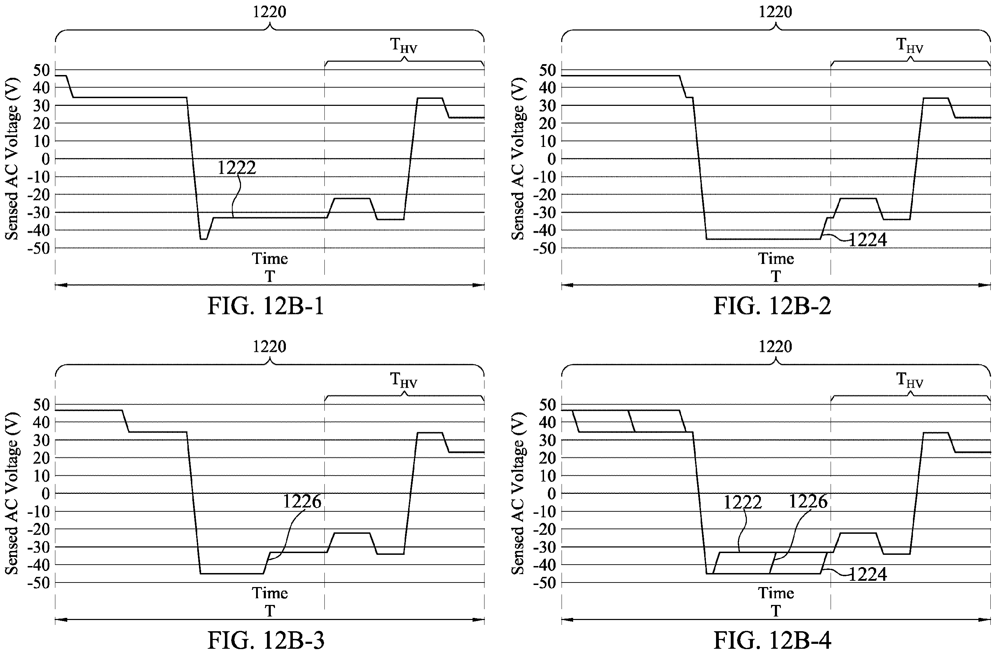

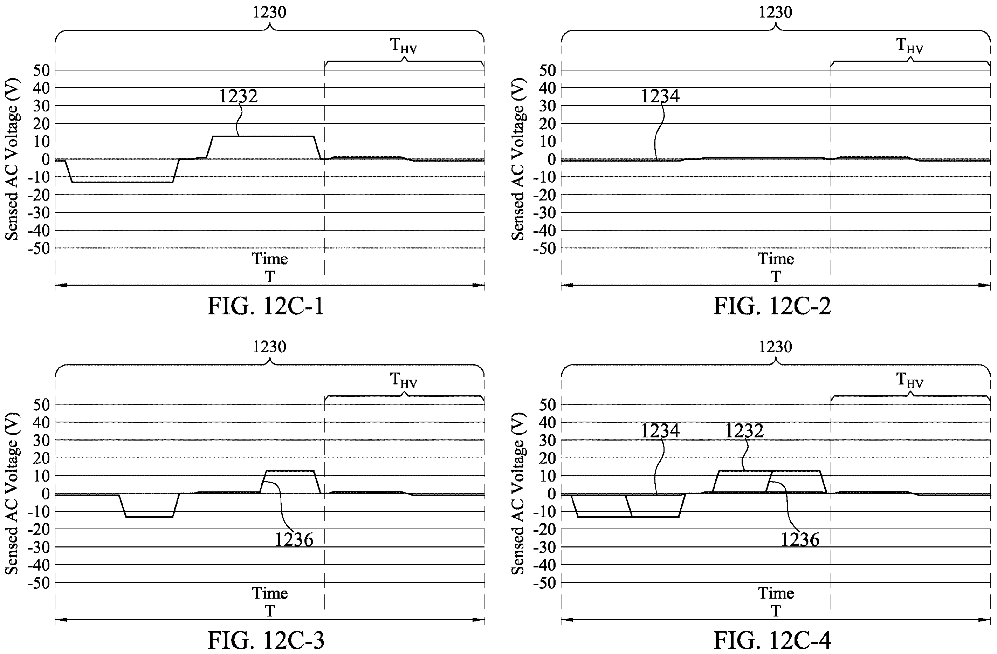

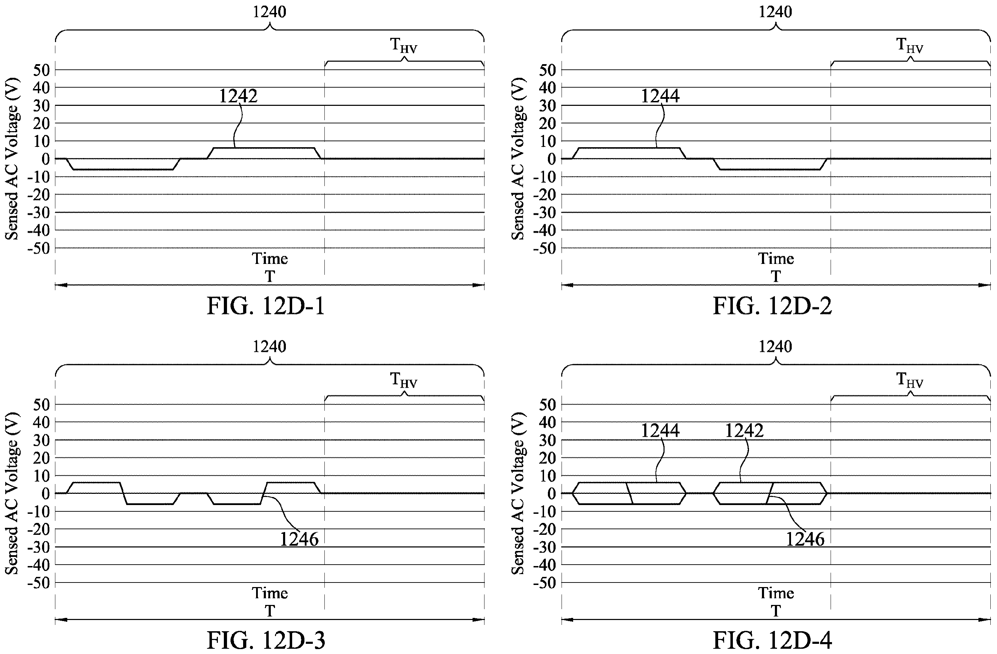

In FIGS. 12A-1 to 12A-3, curves 1212, 1214, and 1216 are regarded as a dark-state voltage, a bright-state voltage, and grayscale voltage applied to a pixel circuit on the activated scanning electrode during the first-type manipulation stage (MP1), respectively. Additionally, curves 1212, 1214, and 1216 are collectively shown in FIG. 12A-4. In FIGS. 12B-1 to 12B-3, curves 1222, 1224, and 1226 are regarded as a dark-state voltage, a bright-state voltage, and grayscale voltage applied to a pixel circuit on the activated scanning electrode during the selection stage (SEL), respectively. Additionally, curves 1222, 1224, and 1226 are collectively shown in FIG. 12B-4. In FIGS. 12C-1 to 12C-3, curves 1232, 1234, and 1236 are regarded as a dark-state voltage, a bright-state voltage, and grayscale voltage applied to a pixel circuit on the activated scanning electrode during the second-type isolated stage (ISO2), respectively. Additionally, curves 1232, 1234, and 1236 are collectively shown in FIG. 12C-4. In FIGS. 12D-1 to 12D-3, curves 1242, 1244, and 1246 are regarded as a dark-state voltage, a bright-state voltage, and grayscale voltage applied to a pixel circuit on the activated scanning electrode during the second-type non-selection stage (NS2), respectively. Additionally, curves 1242, 1244, and 1246 are collectively shown in FIG. 12D-4.

For example, when the pixel circuits on scan line 3 are within the first-type manipulation stage (MP1), the pixel circuits on scan line 1 are within the second-type isolated stage (ISO2). When the bright-state voltage (e.g., curve 1214 shown in FIG. 12A-2) is applied to the pixel circuits on scan line 3, the scanning electrode driving circuit 221 may apply the common AC voltage pulses, which are very close to the data voltage pulses applied to the ChLC molecules of the pixel circuits on scan line 1, resulting in the ChLC molecules of the pixel circuits on scan line 1 sensing a voltage level close to 0V (e.g., an AC voltage with a very low amplitude, such as 1V or lower) within the whole duration of the second-type isolated stage (ISO2) of the pixel circuits on scan line 1. Additionally, when the dark-state voltage or grayscale voltage (e.g., curves 1212 and 1216 shown in FIG. 12A-1 and FIG 12A-3) is applied to the pixel circuits on scan line 3, the AC voltage difference sensed by the ChLC molecules of the pixel circuits on scan line 1 still follows the curve of the dark-state voltage or grayscale voltage before the high-voltage time period T_{HV}, and set to a voltage level close to 0V (e.g., an AC voltage with a very low amplitude) within the high-voltage time period T_{HV}, as shown in FIGS. 12C-1 to 12C-4. The operations of the second-type non-selection stage (NS2) are similar to those described in the embodiments of FIGS. 7A-1 to 7A-4, 7B-1 to 7B-4, and 7C-1 to 7C-4, and thus the details will not be repeated here. In some embodiments, the reflectivity of the ChLC molecule applied with the bright-state voltage and the dark-state voltage using the HCSD+ driving mode shown in Table 7 may be approximately 28.72% and 2.38%, respectively, resulting in the contrast ratio being (28.72/2.38)=12.06, thereby providing a better contrast ratio than the SD+ driving mode.

Specifically, the second-type isolated stage (ISO2) is prior to the selection stage (SEL) during the HCSD+ scanning procedure in the second variant, while the second-type isolate stage (ISO2) is subsequent to the selection stage (SEL) during the HCSD+ scanning procedure in the first variant.

In the second variant of the fourth embodiment, the stages of the pixel circuits on four adjacent scan lines during the HCSD+ scanning procedure have equal durations and can be arranged in a pipelined manner in the sequence of the first-type manipulation stage (MP1), second-type isolated stage (ISO2), selection stage (SEL), and second-type non-selection stage (NS2), as shown in Table 8.

**Table 8**

| Scan Line | T1 | T2 | T3 | T4 | T5 | T6 | T7 | T8 |
|---|---|---|---|---|---|---|---|---|
| 1 | MP1 | ISO2 | SEL | NS2 | NS2 | NS2 | NS2 | NS2 |
| 2 | NS2 | MP1 | ISO2 | SEL | NS2 | NS2 | NS2 | NS2 |
| 3 | NS2 | NS2 | MP1 | ISO2 | SEL | NS2 | NS2 | NS2 |
| 4 | NS2 | NS2 | NS2 | MP1 | ISO2 | SEL | NS2 | NS2 |

FIGS. 13A-1 to 13A-4 are waveform diagrams illustrating a third-type manipulation stage within the HCSD+ scanning procedure in a fifth embodiment of the present disclosure. FIGS. 13B-1 to 13B-4 are waveform diagrams illustrating a selection stage within the HCSD+ scanning procedure in the fifth embodiment of the present disclosure. FIGS. 13C-1 to 13C-4 are waveform diagrams illustrating a second-type isolated stage within the HCSD+ scanning procedure in the fifth embodiment of the present disclosure. FIGS. 13D-1 to 13D-4 are waveform diagrams illustrating a second-type non-selection stage within the HCSD+ scanning procedure in the fifth embodiment of the present disclosure.

In the fifth embodiment, the HCSD+ scanning procedure for each pixel circuit on an activated scanning electrode includes an a third-type manipulation stage (MP3), a selection stage (SEL), an second-type isolated stage (ISO2), and a second-type non-selection stage (NS2) in sequence, compared to the HCSD+ driving mode described in the embodiments of FIGS. 9A-1 to 9A-4, 9B-1 to 9B-4, 9C-1 to 9C-4, and 9D-1 to 9D-4. The waveforms corresponding to the third-type manipulation stage (MP3), selection stage (SEL), second-type isolated stage (ISO2), and second-type non-selection stage (NS2) are illustrated by stages 1310, 1320, 1330, and 1340 in FIGS. 13A-1 to 13A-4, 13B-1 to 13B-4, 13C-1 to 13C-4, and 13D-1 to 13D-4, respectively. The third-type manipulation stage (MP3) can be considered as a first-type manipulation stage (MP1) with its latter portion replaced by a partial second-type isolated stage. For purposes of description, the third-type manipulation stage (MP3) is labeled as stage 1310, as shown in FIGS. 13A-1 to 13A-4.

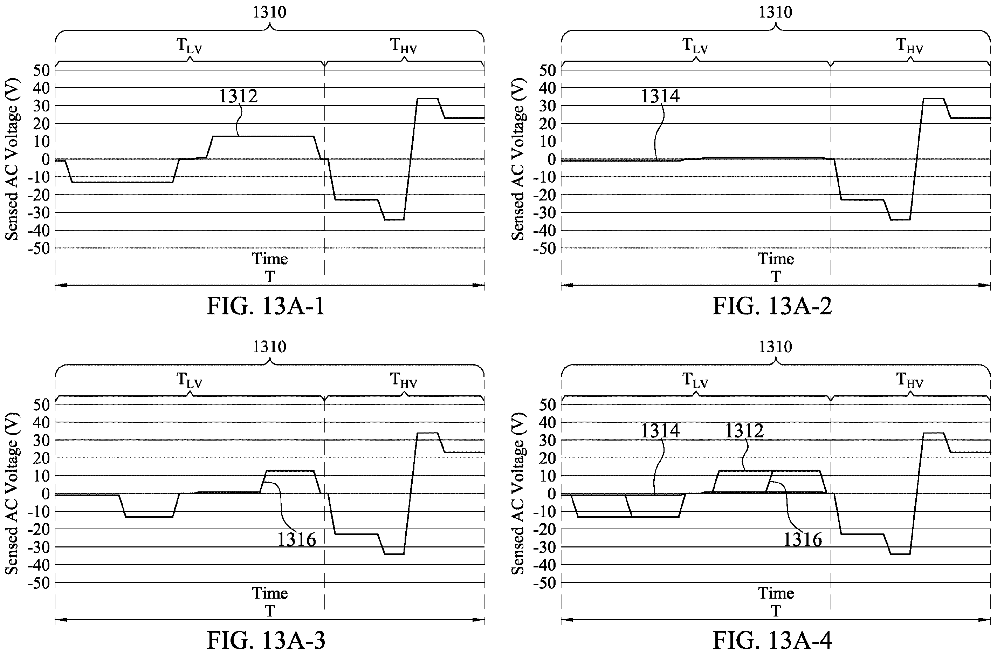

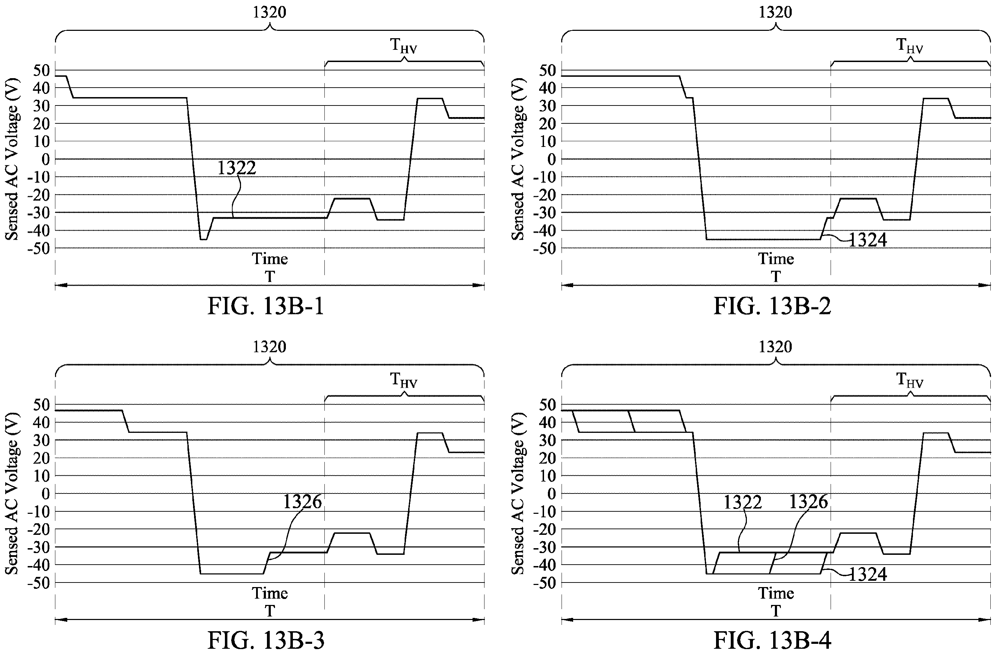

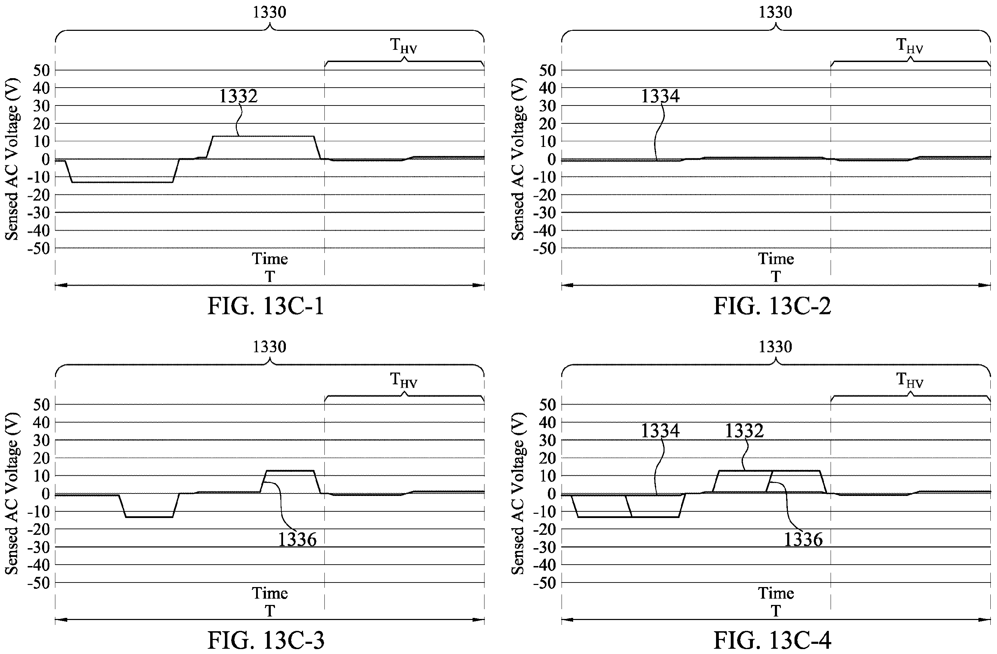

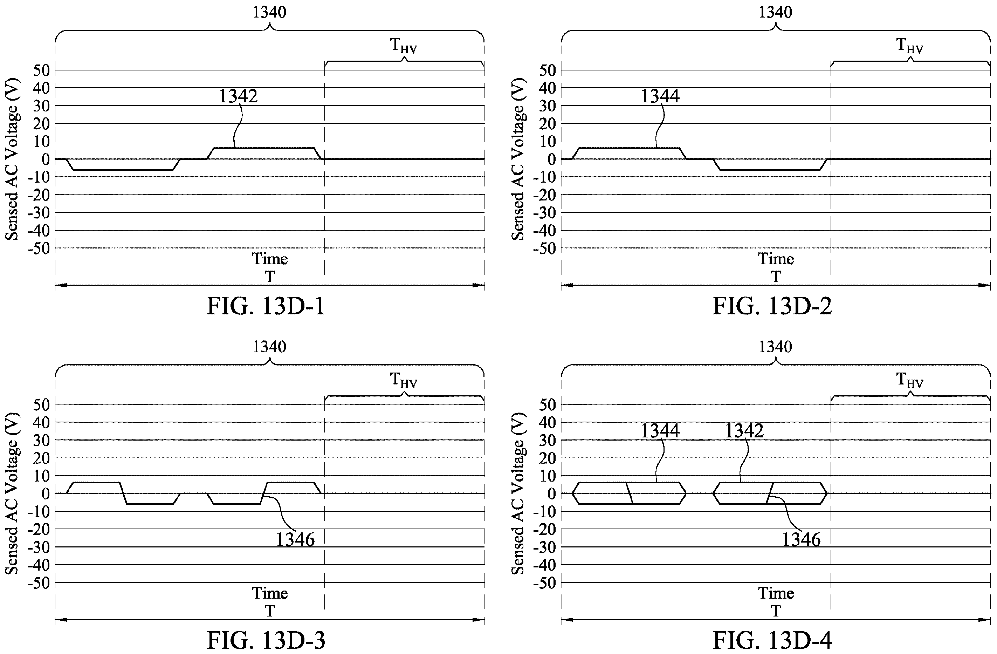

In FIGS. 13A-1 to 13A-3, curves 1312, 1314, and 1316 are regarded as a dark-state voltage, a bright-state voltage, and grayscale voltage applied to a pixel circuit on the activated scanning electrode during the third-type manipulation stage (MP3), respectively. Additionally, curves 1312, 1314, and 1316 are collectively shown in FIG. 13A-4. In FIGS. 13B-1 to 13B-3, curves 1322, 1324, and 1326 are regarded as a dark-state voltage, a bright-state voltage, and grayscale voltage applied to a pixel circuit on the activated scanning electrode during the selection stage (SEL), respectively. Additionally, curves 1322, 1324, and 1326 are collectively shown in FIG. 13B-4. In FIGS. 13C-1 to 13C-3, curves 1332, 1334, and 1336 are regarded as a dark-state voltage, a bright-state voltage, and grayscale voltage applied to a pixel circuit on the activated scanning electrode during the second-type isolated stage (ISO2), respectively. Additionally, curves 1332, 1334, and 1336 are collectively shown in FIG. 13C-4. In FIGS. 13D-1 to 13D-3, curves 1342, 1344, and 1346 are regarded as a dark-state voltage, a bright-state voltage, and grayscale voltage applied to a pixel circuit on the activated scanning electrode during the second-type non-selection stage (NS2), respectively. Additionally, curves 1342, 1344, and 1346 are collectively shown in FIG. 13D-4.

In the first variant of the fifth embodiment, the third-type manipulation stage (MP3), selection stage (SEL), second-type isolated stage (ISO2), and second-type non-selection stage (NS2) of the pixel circuits on four adjacent scan lines during the HCSD+ scanning procedure have equal durations T and can be arranged in a pipelined manner in the sequence of the third-type manipulation stage (MP3), selection stage (SEL), second-type isolated stage (ISO2), and second-type non-selection stage (NS2), as shown in Table 9.

**Table 9**

| Scan Line | T1 | T2 | T3 | T4 | T5 | T6 | T7 | T8 |
|---|---|---|---|---|---|---|---|---|
| 1 | MP3 | SEL | ISO2 | NS2 | NS2 | NS2 | NS2 | NS2 |
| 2 | NS2 | MP3 | SEL | ISO2 | NS2 | NS2 | NS2 | NS2 |
| 3 | NS2 | NS2 | MP3 | SEL | ISO2 | NS2 | NS2 | NS2 |
| 4 | NS2 | NS2 | NS2 | MP3 | SEL | ISO2 | NS2 | NS2 |

In the second variant of the fifth embodiment, the stages of the pixel circuits on four adjacent scan lines during the HCSD+ scanning procedure have equal durations and can be arranged in a pipelined manner in the sequence of the third-type manipulation stage (MP3), second-type isolated stage (ISO2), selection stage (SEL), and second-type non-selection stage (NS2), as shown in Table 10.

**Table 10**

| Scan Line | T1 | T2 | T3 | T4 | T5 | T6 | T7 | T8 |
|---|---|---|---|---|---|---|---|---|
| 1 | MP3 | ISO2 | SEL | NS2 | NS2 | NS2 | NS2 | NS2 |
| 2 | NS2 | MP3 | ISO2 | SEL | NS2 | NS2 | NS2 | NS2 |
| 3 | NS2 | NS2 | MP3 | ISO2 | SEL | NS2 | NS2 | NS2 |
| 4 | NS2 | NS2 | NS2 | MP3 | ISO2 | SEL | NS2 | NS2 |

Specifically, the second-type isolated stage (ISO2) is prior to the selection stage (SEL) during the HCSD+ scanning procedure in the second variant, while the second-type isolate stage (ISO2) is subsequent to the selection stage (SEL) during the HCSD+ scanning procedure in the first variant.

For example, referring to Table 9, when the pixel circuits on scan line 3 are within the third-type manipulation stage (MP3), the pixel circuits on scan line 1 are within the second-type isolated stage (ISO2). When the bright-state voltage (e.g., curve 1314 shown in FIG. 13A-2) is applied to the pixel circuits on scan line 3, the scanning electrode driving circuit 221 may apply the common AC voltage pulses, which are very close to the data voltage pulses applied to the ChLC molecules of the pixel circuits on scan line 3, resulting in the ChLC molecules of the pixel circuits on scan line 3 sensing a voltage level close to 0V (e.g., an AC voltage with a very low amplitude, such as 1V or lower) during the low-voltage time period T_{LV}. In other words, the bright-state voltage sensed by the ChLC molecules of the pixel circuits on scan line 3 is set to a voltage level close to 0V (e.g., an AC voltage with a very low amplitude) during the low-voltage time period T_{LV}. Additionally, the dark-state voltage and grayscale voltage within the third-type manipulation stage (MP3) still follow the curve 1312 and curve 1316 shown in FIGS. 13A-1 and 13A-3, respectively.

The operations of the second-type isolated stage (ISO2) are similar to those described in the embodiment of FIGS. 12C-1 to 12C-4, and the details thereof will not be repeated here. Furthermore, the operations of the second-type non-selection stage (NS2) are similar to those described in the embodiments of FIGS. 7A-1 to 7A-4, 7B-1 to 7B-4, and 7C-1 to 7C-4, and thus the details will not be repeated here. In some embodiments, the reflectivity of the ChLC molecule applied with the bright-state voltage and the dark-state voltage using the HCSD+ driving mode shown in Table 10 may be approximately 28.85% and 2.48%, respectively, resulting in the contrast ratio being (28.85/2.48)=11.63, thereby providing a better contrast ratio than the SD+ driving mode.

In view of the above, by using the HCSD+ driving mode described in the fourth and fifth embodiments, the display image rendered by the ChLC display device can have high contrast and high reflectivity. Furthermore, since the bright-state voltage sensed by the ChLC molecules of the pixel circuits during the second-type non-selection stage (NS2) is set to a voltage level close to 0V (e.g., an AC voltage with a very low amplitude), the power consumption of the display device can be reduced.

FIG. 14 is a flowchart of a scan driving method for rendering a high-contrast image in accordance with some embodiments of the present disclosure.

Step 1410: utilizing the driving circuit section to sequentially activate each scanning electrode within the display panel using a modified pulse-width modulation (PWM) scanning procedure, which comprises a first stage, a second stage, and a third stage in sequence. In some embodiments, the first stage, second stage, and third stage may refer to the any type of the manipulation stage, the selection stage, and any type of the non-selection stage within the HCSD+ scanning procedure, respectively. Additionally, the HCSD+ scanning procedure may further include a fourth stage (e.g., any type of the isolated stage) arranged between the second stage and the third stage, or arranged between the first stage and the second stage.

Step 1420: utilizing the driving circuit section to apply one or more alternating-current (AC) voltage pulses to pixel circuits on a first scanning electrode among the plurality of scanning electrodes during the first stage of each pixel circuit on the first scanning electrode to manipulate grayscale values of the pixel circuits on the first scanning electrode to be written in the second stage. In some embodiments, when the pixel circuits on the first scanning electrode are within the first stage, the pixel circuits on the remaining scanning electrodes, which are within the third stage, sense a zero voltage during a high-voltage period within the first stage of the pixel circuits on the first scanning electrode.

While the present disclosure has been described with reference to specific embodiments, it is evident that many alternatives, modifications, and variations may be apparent to those skilled in the art. For example, various components of the embodiments may be interchanged, added, or substituted in other embodiments. Also, all of the elements of each figure are not necessary for operation of the disclosed embodiments. For example, one of ordinary skill in the art of the disclosed embodiments would be able to make and use the teachings of the present disclosure by simply employing the elements of the independent claims. Accordingly, embodiments of the present disclosure as set forth herein are intended to be illustrative, not limiting. Various changes may be made without departing from the spirit and scope of the present disclosure.

Even though numerous characteristics and advantages of the present disclosure have been set forth in the foregoing description, together with details of the structure and function of the invention, the disclosure is illustrative only. Changes may be made to details, especially in matters of shape, size, and arrangement of parts, within the principles of the invention to the full extent indicated by the broad general meaning of the terms in which the appended claims are expressed.

## Claims

1. A cholesteric liquid-crystal display device, comprising:
a liquid-crystal display panel, comprising:
a first substrate on which a plurality of scanning electrodes extending in a first direction are formed;
a second substrate on which a plurality of data electrodes extending in a second direction different from the first direction are formed;
a cholesteric liquid crystal layer formed between the first substrate and the second substrate; and
a driving circuit section, configured to apply a plurality of alternating-current (AC) voltage pulses to pixel circuits at intersections between the scanning electrodes and the data electrodes,
wherein a modified pulse-width modulation (PWM) scanning procedure of the pixel circuits on each scanning electrode sequentially activated by the driving circuit section comprises a first stage, a second stage, and a third stage arranged in sequence,
wherein the first stage is configured to manipulate grayscale values of the pixel circuits on a first scanning electrode among the plurality of scanning electrodes to be written in the second stage,
wherein when the pixel circuits on the first scanning electrode are within the first stage, the pixel circuits on the remaining scanning electrodes, which are within a first period of the third stage, sense a zero voltage, wherein the first period corresponds to a high-voltage period within the first stage of the pixel circuits on the first scanning electrode.

2. The cholesteric liquid-crystal display device of Claim 1, wherein:
the modified pulse-width modulation (PWM) scanning procedure of each pixel circuit on the first scanning electrode further comprises a fourth stage arranged between the second stage and the third stage; and
the first stage, the second stage, the third stage, and the fourth stage have equal durations.

3. The cholesteric liquid-crystal display device of Claim 2, wherein when a bright-state voltage is applied to each pixel circuit on the first scanning electrode during the first stage, the pixel circuits on the remaining scanning electrodes, which are within the fourth stage, sense a voltage substantially equal to the zero voltage or close to the zero voltage.

4. The cholesteric liquid-crystal display device of Claim 2, wherein:
when a bright-state voltage is applied to each pixel circuit on the first scanning electrode during the first stage, each pixel circuit on the first scanning electrode senses a voltage substantially equal to the zero voltage or close to the zero voltage during a low-voltage period within the first stage.

5. The cholesteric liquid-crystal display device of Claim 1, wherein:
the modified pulse-width modulation (PWM) scanning procedure of each pixel circuit on the first scanning electrode further comprises a fourth stage arranged between the first stage and the second stage; and
the first stage, the second stage, the third stage, and the fourth stage have equal durations.

6. The cholesteric liquid-crystal display device of Claim 5, wherein when a bright-state voltage is applied to each pixel circuit on the first scanning electrode during the first stage, the pixel circuits on the remaining scanning electrodes, which are within the fourth stage, sense a voltage substantially equal to the zero voltage or close to the zero voltage.

7. The cholesteric liquid-crystal display device of Claim 5, wherein:
when a bright-state voltage is applied to each pixel circuit on the first scanning electrode during the first stage, each pixel circuit on the first scanning electrode senses a voltage substantially equal to the zero voltage or close to the zero voltage during a low-voltage period within the first stage.

8. A scan driving method for rendering a high-contrast image, for use in a cholesteric liquid-crystal display device, the cholesteric liquid-crystal display device comprising a display panel and a driving circuit section, wherein the display panel comprises a plurality of scanning electrodes and a plurality of data electrodes, the method comprising:
utilizing the driving circuit section to sequentially activate each scanning electrode within the display panel using a modified pulse-width modulation (PWM) scanning procedure, which comprises a first stage, a second stage, and a third stage in sequence; and
utilizing the driving circuit section to apply one or more alternating-current (AC) voltage pulses to pixel circuits on a first scanning electrode among the plurality of scanning electrodes during the first stage of each pixel circuit on the first scanning electrode to manipulate grayscale values of the pixel circuits on the first scanning electrode to be written in the second stage,
wherein when the pixel circuits on the first scanning electrode are within the first stage, the pixel circuits on the remaining scanning electrodes, which are within a first period of the third stage, sense a zero voltage, wherein the first period corresponds to a high-voltage period within the first stage of the pixel circuits on the first scanning electrode.

9. The method of Claim 8, wherein:
the modified pulse-width modulation (PWM) scanning procedure of each pixel circuit on the first scanning electrode further comprises a fourth stage arranged between the second stage and the third stage;
the first stage, the second stage, the third stage, and the fourth stage have equal durations; and
when a bright-state voltage is applied to each pixel circuit on the first scanning electrode during the first stage, the pixel circuits on the remaining scanning electrodes, which are within the fourth stage, sense a voltage substantially equal to the zero voltage or close to the zero voltage during the fourth stage.

10. The method of Claim 8, wherein:
the modified pulse-width modulation (PWM) scanning procedure of each pixel circuit on the first scanning electrode further comprises a fourth stage arranged between the second stage and the third stage;
the first stage, the second stage, the third stage, and the fourth stage have equal durations; andwhen a bright-state voltage is applied to each pixel circuit on the first scanning electrode during the first stage, each pixel circuit on the first scanning electrode senses a voltage substantially equal to the zero voltage or close to the zero voltage during a low-voltage period within the first stage.

11. The method of Claim 8, wherein:
the modified pulse-width modulation (PWM) scanning procedure of each pixel circuit on the first scanning electrode further comprises a fourth stage arranged between the first stage and the second stage; and
the first stage, the second stage, the third stage, and the fourth stage have equal durations;
when a bright-state voltage is applied to each pixel circuit on the first scanning electrode during the first stage, the pixel circuits on the remaining scanning electrodes, which are within the fourth stage, sense a voltage substantially equal to the zero voltage or close to the zero voltage during the fourth stage.

12. The method of Claim 8, wherein:
the modified pulse-width modulation (PWM) scanning procedure of each pixel circuit on the first scanning electrode further comprises a fourth stage arranged between the first stage and the second stage;
the first stage, the second stage, the third stage, and the fourth stage have equal durations; and
when a bright-state voltage is applied to each pixel circuit on the first scanning electrode during the first stage, each pixel circuit on the first scanning electrode senses a voltage substantially equal to the zero voltage or close to the zero voltage during a low-voltage period within the first stage.

13. A cholesteric liquid-crystal display device, comprising:
a liquid-crystal display panel, comprising:
a first substrate on which a plurality of scanning electrodes extending in a first direction are formed;
a second substrate on which a plurality of data electrodes extending in a second direction different from the first direction are formed;
a cholesteric liquid crystal layer formed between the first substrate and the second substrate; and
a driving circuit section, configured to apply a plurality of alternating-current (AC) voltage pulses to pixel circuits at intersections between the scanning electrodes and the data electrodes,
wherein the driving circuit section is configured to activate each scanning electrode sequentially using a modified pulse-width modulation (PWM) scanning procedure which comprises a first stage, a second stage, and a third stage arranged in sequence,
wherein when the driving circuit section activates a first scanning electrode among the plurality of scanning electrode, the first stage of each pixel circuit on the first scanning electrode is configured to manipulate grayscale values of each pixel circuit on the first scanning electrode to be written in the second stage,
wherein when a bright-state voltage is applied to the pixel circuits on the first scanning electrode during the first stage, the pixel circuits on the remaining scanning electrodes, which are within the third stage, sense a voltage substantially equal to a zero voltage or close to the zero voltage.

14. The cholesteric liquid-crystal display device of Claim 13, wherein:
the modified pulse-width modulation (PWM) scanning procedure of each pixel circuit on the first scanning electrode further comprises a fourth stage subsequent to the third stage;
the first stage, the second stage, the third stage, and the fourth stage have equal durations; and
when the pixel circuits on the first scanning electrode among are within the first stage, the pixel circuits on the remaining scanning electrodes, which are within the fourth stage, sense the zero voltage during a first period within the fourth stage, which corresponds to a high-voltage period within the first stage of the pixel circuits on the first scanning electrode.

15. The cholesteric liquid-crystal display device of Claim 14, wherein:
the modified pulse-width modulation (PWM) scanning procedure of each pixel circuit on the first scanning electrode further comprises a fourth stage subsequent to the third stage;
the first stage, the second stage, the third stage, and the fourth stage have equal durations; and
when the bright-state voltage is applied to each pixel circuit on the first scanning electrode during the first stage, each pixel circuit on the first scanning electrode senses a voltage substantially equal to the zero voltage or close to the zero voltage during a low-voltage period within the first stage.
